# EUROPEAN PATENT APPLICATION

(11) **EP 4 730 819 A1**
(43) Date of publication of application: **22.04.2026**
(21) Application number: 24889227.5
(22) Date of filing: 23.10.2024
(51) Int. Cl.: H04N 21/4402, H04N 21/431, H04N 21/462, H04N 21/478

(54) **DISPLAY APPARATUS AND OPERATION METHOD THEREOF**

(30) Priority: 06.11.2023 KR 20230151934
(71) Applicant: Samsung Electronics Co., Ltd., Suwon-si, Gyeonggi-do 16677 (KR)
(72) Inventor: JANG, Sungchang, Suwon-si, Gyeonggi-do 16677 (KR); SHIN, Yongwoo, Suwon-si, Gyeonggi-do 16677 (KR)
(74) Representative: Appleyard Lees IP LLP
(86) International application number: PCT/KR2024/096386
(87) International publication number: WO 2025/101041

(57) **Abstract**

A display device including: a display; a memory storing one or more instructions; and at least one processor configured to execute the one or more instructions to: control the display to display a first image based on receiving the first image; output a first sub-image corresponding to a first information area of the first image; control the display to display a second image, different from the first image, based on receiving the second image; determine a plurality of candidate areas of the second image, based on a first aspect ratio of the first image, a second aspect ratio of the second image, and location information of the first information area; determine priorities of the plurality of candidate areas based on the location information of the first information area and the second aspect ratio; and identify, based on the priorities, a second information area corresponding to the first information area.

## Description

### TECHNICAL FIELD

This disclosure relates to a display device capable of displaying an image provided from a source device and outputting images having various aspect ratios, and an operating method thereof.

### BACKGROUND ART

With the technological development of display devices, display devices capable of providing various functions have been developed.

A representative example of display devices include a television (TV). A TV of the related art performs a function of simply receiving broadcast signals and reproducing broadcast content (e.g., news, series, and entertainment programs).

Recently, with the technological development of display devices, various applications or programs may be stored and installed in TVs to perform various functions, and various functions and services, in addition to a broadcast content reproducing function, may be provided through the installed applications. For example, a game application may be stored and installed in a TV and game content may be executed through the game application.

Also, with the development of communication technology or communication connection function of display devices, display devices may provide various functions or services through wired or wireless communication with an external device. For example, a display device may be connected to an external device (e.g., a source device or a game console device) through wired or wireless communication, and receive content (e.g., game content) from the external device (e.g., the source device or the game console device) through the wired or wireless communication.

When providing game content through display devices, the display devices need to output the game content in such a manner to increase user satisfaction and convenience. For example, a display device may perform a function of zooming in on and displaying specific information included in a game image or sharing the specific information with an external device. When game content is changed or an aspect ratio of the game image is changed, a method of automatically recognizing the specific information even in the changed game image is required.

### DISCLOSURE OF INVENTION

### SOLUTION TO PROBLEM

A display device according to an embodiment of the disclosure includes a display, a memory storing one or more instructions, and at least one processor configured to execute the one or more instructions.

The at least one processor is configured to execute the one or more instructions to control the display to display a first image based on receiving the first image.

The at least one processor is configured to execute the one or more instructions to output a first sub-image corresponding to a first information area identified of the first image.

The at least one processor is configured to execute the one or more instructions to control the display to display a second image based on receiving the second image different from the first image.

The at least one processor is configured to execute the one or more instructions to determine a plurality of candidate areas from the second image, based on first aspect ratio of the first image, second aspect ratio of the second image, and location information of the first information area.

The at least one processor is configured to execute the one or more instructions to determine priorities of the plurality of candidate areas based on the location information of the first information area and the second aspect ratio information.

The at least one processor is configured to execute the one or more instructions to identify, based on the priorities, a second information area corresponding to the first information area from the plurality of candidate areas.

The at least one processor is configured to execute the one or more instructions to output a second sub-image corresponding to the second information area.

An operating method of a display device, according to an embodiment of the disclosure, includes displaying a first image based on receiving the first image.

The operating method of the display device, according to an embodiment of the disclosure, includes outputting a first sub-image corresponding to a first information area of the first image.

The operating method of the display device, according to an embodiment of the disclosure, includes displaying a second image based on receiving the second image different from the first image.

The operating method of the display device, according to an embodiment of the disclosure, includes determining a plurality of candidate areas from the second image, based on first aspect ratio of the first image, second aspect ratio of the second image, and location information of the first information area.

The operating method of the display device, according to an embodiment of the disclosure, includes determining priorities of the plurality of candidate areas based on the location information of the first information area and the second aspect ratio.

The operating method of the display device, according to an embodiment of the disclosure, includes identifying, based on the priorities, a second information area corresponding to the first information area from the plurality of candidate areas.

The operating method of the display device, according to an embodiment of the disclosure, includes outputting a second sub-image corresponding to the second information area.

### BRIEF DESCRIPTION OF DRAWINGS

The above and other aspects, features, and advantages of certain embodiments of the present disclosure will be more apparent from the following description taken in conjunction with the accompanying drawings, in which:
FIG. 1 is a diagram showing a display device and a source device, according to an embodiment of the disclosure;
FIG. 2 illustrates game images corresponding to various types of game content, according to an embodiment of the disclosure;
FIG. 3 illustrates game images having various aspect ratios, according to an embodiment of the disclosure;
FIG. 4 is a flowchart of an operating method of a display device, according to an embodiment of the disclosure;
FIG. 5 is a diagram for describing an operation in which a display device zooms in on or shares a partial area included in an image, according to an embodiment of the disclosure;
FIG. 6 is a diagram showing a user interface screen for setting a game mode of a display device, according to an embodiment of the disclosure;
FIG. 7, FIG. 8, FIG. 9, and FIG. 10 are diagrams for describing operations in which a display device determines at least one candidate area, according to an embodiment of the disclosure.
FIG. 11 is a diagram for describing an operation in which a display device determines at least one candidate area, based on genre information of game content, according to an embodiment of the disclosure;
FIG. 12 is a diagram for describing an operation in which a display device determines at least one candidate area, based on a user input, according to an embodiment of the disclosure;
FIG. 13 is a diagram for describing an operation in which a display device determines at least one candidate area, according to an embodiment of the disclosure;
FIG. 14 is a diagram showing an operation in which a display device identifies one of detected areas as an information area, according to an embodiment of the disclosure;
FIG. 15 is a diagram showing an operation of, when an aspect ratio of an image displayed on a display is changed, displaying an image obtained by zooming in on an identified information area, according to an embodiment of the disclosure;
FIG. 16 is a diagram showing an operation of, when an image displayed on a display is changed, sharing an image corresponding to an identified information area with an external device, according to an embodiment of the disclosure;
FIG. 17 is a diagram showing an operation of, when image content displayed on a display is changed, displaying an image obtained by zooming in on an identified information area, according to an embodiment of the disclosure;
FIG. 18 is a block diagram of a configuration of a source device, according to an embodiment of the disclosure;
FIG. 19 is a block diagram of a configuration of a display device, according to an embodiment of the disclosure; and
FIG. 20 is a block diagram of a configuration of a display device, according to an embodiment of the disclosure.

### MODE FOR THE INVENTION

Throughout the disclosure, the expression "at least one of a, b or c" indicates only a, only b, only c, both a and b, both a and c, both b and c, all of a, b, and c, or variations thereof.

As used herein, the term "or" includes any and all combinations of one or more of the associated listed items.

The terms used in the specification will be briefly defined, and the disclosure will be described in detail.

All terms including descriptive or technical terms which are used herein should be construed as having meanings that are obvious to one of ordinary skill in the art. However, the terms may have different meanings according to the intention of one of ordinary skill in the art, precedent cases, or the appearance of new technologies. Also, some terms may be arbitrarily selected by the applicant, and in this case, the meaning of the selected terms will be described in detail in the detailed description of the disclosure. Thus, the terms used herein have to be defined based on the meaning of the terms together with the description throughout the specification.

When a part "includes," "comprises," or "has" an element, or similar terminology, unless there is a particular description contrary thereto, the part may further include other elements, not excluding the other elements. In addition, terms such as "unit", "- or/-er", and "module" described in the specification denote a unit that processes at least one function or operation, which may be implemented in hardware or software, or implemented in a combination of hardware and software.

Hereinafter, embodiments of the disclosure will be described in detail with reference to the accompanying drawings such that one of ordinary skill in the art may easily implement the disclosure. However, the disclosure may be implemented in various different forms and is not limited to an embodiment of the disclosure described herein. Also, in the drawings, parts irrelevant to the description are omitted in order to clearly describe the disclosure, and like reference numerals designate like elements throughout the specification.

In the present specification, the term "user" according to an embodiment of the disclosure denotes a person who controls a system, a function, or an operation, and may include a developer, a manager, or an installation engineer.

Also, in the present specification, an "image" or a "picture" according to an embodiment of the disclosure may denote a still image, a moving image including a plurality of continuous still images (or frames), or a video.

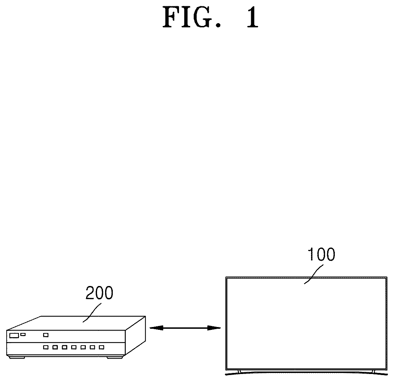

FIG. 1 is a diagram showing a display device 100 and a source device 200, according to an embodiment of the disclosure.

Referring to FIG. 1, the display device 100 according to an embodiment of the disclosure may be connected to the source device 200 through wired or wireless communication.

The source device 200 according to an embodiment of the disclosure may provide video or audio content to the display device 100. For example, the source device 200 may be a video game console. However, the source device 200 is not limited thereto and may include any type of electronic devices capable of providing content to the display device 100, such as a set top box, a digital versatile disk (DVD) player, a Blu-ray disk, a personal computer (PC), or a game device. The source device 200 is a device for providing content and may be alternatively referred to as a host device, a content providing device, an electronic device, a storage device, a computing device, a server device, or a server.

The display device 100 according to an embodiment of the disclosure may output or display content received from the source device 200. The display device 100 may include any type of electronic devices capable of receiving and outputting content, such as a network television (TV), a smart TV, an Internet TV, a web TV, an Internet protocol TV (IPTV), or a PC. The display device 100 is a device for receiving and displaying content, and may also be referred to as a content receiving device, a synchronization device, an electronic device, or a computing device.

The source device 200 and the display device 100 may transmit and receive content through wired communication. For example, the source device 200 and the display device 100 may be connected to each other through a cable, and the source device 200 and the display device 100 may each include one or more ports for cable connection. The one or more ports may include for example, a digital input interface such as a high-definition multimedia interface (HDMI) port, a display port, a type-C, or the like.

Alternatively, the source device 200 and the display device 100 may transmit and receive content through wireless communication. For example, the source device 200 and the display device 100 may include at least one communication module performing communication according to wireless HDMI communication, Bluetooth, Wi-Fi, Bluetooth low energy (BLE), near field communication (NFC)/radio frequency identification (RFID), Wi-Fi direct, ultrawide band (UWB), ZigBee, Internet, 3rd generation (3G), 4G, 5G, and/or 6G communication standards, and may be connected to each other through the communication module.

Hereinafter, for convenience of description, an example in which the source device 200 and the display device 100 are connected to each other through an HDMI cable for performing wired HDMI communication will be described.

For example, the source device 200 and the display device 100 may each include an HDMI port and perform communication through an HDMI cable connected to a corresponding port. When the source device 200 provides content to the display device 100, the source device 200 may first receive extended display identification data (EDID) provided from the display device 100, generate content of a format matching the received EDID, and provide the content to the display device 100.

The EDID may include data or information for defining display performance or display specification for the display device 100 to display the content. For example, the EDID may include at least one of information about a manufacturer of the display device 100, product information, EDID version information, timing information, information about a screen size, information about luminance, or information about a pixel. Here, the information about the screen size may include resolution, an aspect ratio, or the like, which may be provided by the display device 100.

The source device 200 may obtain the EDID provided by the display device 100, generate the format of the content to be transmitted to the display device 100, based on the obtained EDID, and provide the same to the display device 100. For example, when an aspect ratio identified according to the obtained EDID (e.g., a value of the identified aspect ratio) is 32:9, the source device 200 may generate an image of 32:9 that is the identified aspect ratio and transmit the image to the display device 100. In other words, the source device 200 that has received the EDID from the display device 100 may provide, to the display device 100, content of a format matching display performance of the display device 100.

The display device 100 according to an embodiment of the disclosure may support output of various aspect ratios. Here, the aspect ratio indicates a ratio of a horizontal to a vertical length of a screen and may be represented as 4:3, 16:9, 16:10, 21:9, 32:9, or the like. Also, the aspect ratio indicates a ratio of a width to a height of an output screen or image, and may be referred to as a screen ratio or an image ratio. The aspect ratio of a screen may be determined according to a type of an input image.

The display device 100 according to an embodiment of the disclosure may receive various types of content from the source device 200 and display the same. For example, the display device 100 may receive various types of game content from the source device 200 and display a game screen or a game image.

Also, even for same content, the display device 100 may receive and display an image of various aspect ratios. For example, the display device 100 may receive, from the source device 200, game screens or game images having different aspect ratios corresponding to same game content, and display the same.

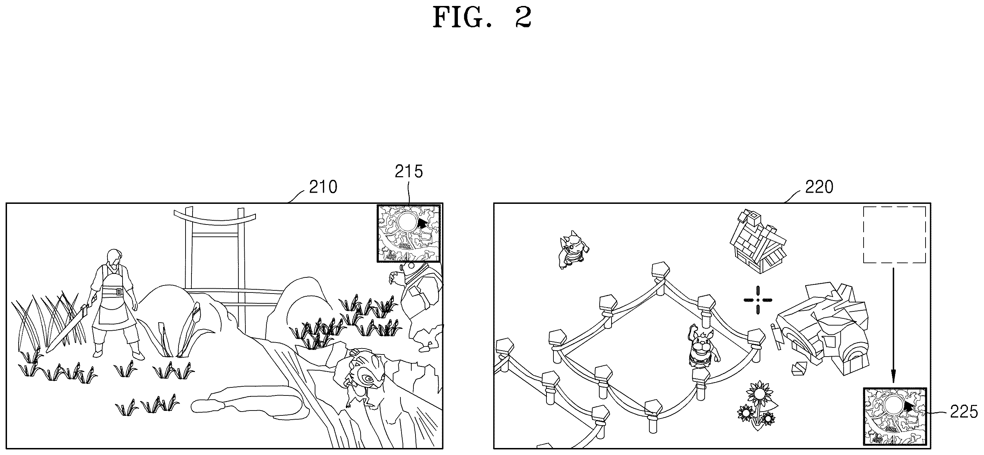

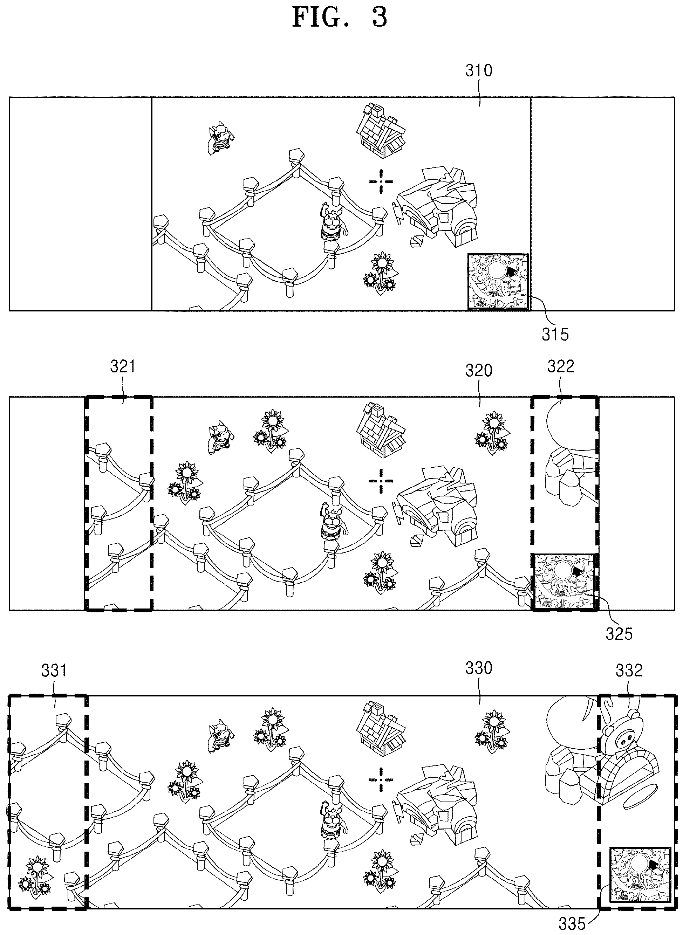

Hereinafter, game images corresponding to various types of game content and game images having various aspect ratios will be described with reference to FIGS. 2 and 3.

FIG. 2 illustrates game images corresponding to various types of game content, according to an embodiment of the disclosure.

Referring to FIG. 2, the display device 100 according to an embodiment of the disclosure may receive various types of game content from the source device 200. For example, the game content may be received in the form of a stream, a packet, or the like including audio and/or video data. Also, the stream or packet corresponding to the game content may include a plurality of images. Here, the image may include an image displayed to reproduce the game content, such as a reproduction screen, a menu screen, or the like. For example, the image may be in the form of an image frame, a frame, or a group of pictures (GOP).

The display device 100 may display game images corresponding to the various types of game content received from the source device 200.

Also, the game content provided by the source device 200 may include 3-dimensional (3D) game content. A 3D game may denote a game enjoyed by a user within a 3D space (e.g., a 3D space representing a virtual stereoscopic space and shape). For example, the user playing the 3D game may play a game by competing, racing, combating, fighting, or going into a war with a virtual character at a specific point in the 3D space. Alternatively, the game content may include, in addition to content for playing a game in a 3D space, like a 3D game, a general game (2D game) in which a game is played in a 2D space.

In the 3D game or general game, a game image may include a separate sub window distinguished from a game reproduction image. For example, the sub window may be displayed in a partial area of a game reproduction screen and an area where the sub window is displayed may be referred to as an information area. However, the disclosure is not limited thereto.

The sub window may include information related to playing of a game, a service for a game participant (e.g., a chat window), or the like. For example, the sub window may include a mini-map, a skill window, an item-related window, a character-related window, a chat window, a control-related window, or the like. A type of the sub window included in the game image may vary depending on a type of the game.

The mini-map may include an image in which a small map showing an entire space where the game is played is displayed. The skill window may be a state window indicating a cool down time of a skill. The item-related window may be a window providing information about an item used in the game. For example, the item-related window may include an item inventory window. The item inventory window may display a type and/or a reuse time of an item possessed by the user. The character-related window may be a window providing information about a character playing the game. For example, the character-related window may include a character state window. The character state window may be a window providing a health point (HP) and/or a mana point (MP), or a resurrection time of a friendly force and/or an enemy force, in a game where the friendly force and the enemy force exist, such as a battle game. The chat window may be a window displaying chat content of a plurality of people participating or watching the game. Alternatively, the chat window may be a window displaying a message related to the game.

The control-related window may include a window for providing information related to a cockpit or driver's seat, in a game in which the user controls an object (e.g., a flying object or a vehicle) used in the game. For example, the control-related window may include a flight simulation cockpit window for providing information that is required or provided during flight or operation. The flight simulation cockpit window may display an air speed, an engine condition, fuel, flaps, trim, and altitude.

The sub window according to an embodiment of the disclosure may be displayed in an area separately partitioned in the game image. Alternatively, the sub window may be displayed in an opaque or semi-transparent form in a partial area of the game image.

The display device 100 according to an embodiment of the disclosure may provide a function of displaying, on a display, an image obtained by zooming in on an information area of the game image, where the sub window is displayed, or sharing the same with an external device. For example, the display device 100 may display, on the display, an image obtained by zooming in on an area where the mini-map is displayed, or share the same with the external device.

Referring to FIG. 2, a size and location of the sub window (e.g., the mini-map) in the game image may vary depending on a type of the game content.

For example, the display device 100 may receive first game content from the source device 200 and display a first game image 210 corresponding to the first game content. Here, a first mini-map 215 may be displayed at a first location in a first size, in the first game image 210.

The display device 100 may set the first mini-map 215 as a zoom-in or sharing area, based on a user input. Here, a specific object (e.g., a box frame) may be displayed in an area that is set as the zoom-in or sharing area. However, the disclosure is not limited thereto.

When the first mini-map 215 is set as the zoom-in or sharing area, the display device 100 may display an image obtained by zooming in on the first mini-map 215 or share the same with the external device.

When the game content received from the source device 200 is changed from the first game content to second game content, the display device 100 may display a second game image 220 corresponding to the second game content. A second mini-map 225 may be displayed at a second location in a second size, in the second game image 220, and the second mini-map 225 may have a different size and location from the first mini-map 215.

To reset the second mini-map 225 as the zoom-in or sharing area, the specific object displayed at a location of the first mini-map 215 needs to be moved to a location of the second mini-map 225.

Accordingly, the user may need to inconveniently reset the zoom-in or sharing area whenever content is changed, which may interfere with the game.

FIG. 3 illustrates game images having various aspect ratios, according to an embodiment of the disclosure.

Referring to FIG. 3, the display device 100 according to an embodiment of the disclosure may display same game content in game images having various aspect ratios. When aspect ratios of the game images are different from each other, different fields of view (FOV) may be provided. For example, when the aspect ratio of the game image is increased in a left and right direction, a wider FOV may be provided. For example, a second game image 320 having an aspect ratio of 21:9 may provide a wider FOV than a first game image 310 having an aspect ratio of 16:9. Compared to the first game image 310, the second game image 320 may further include images of a left area 321 and a right area 322.

Also, a third game image 330 having an aspect ratio of 32:9 may provide a wider FOV than the second game image 320 having the aspect ratio of 21:9. Compared to the second game image 320, the third game image 330 may further include images of a left area 331 and a right area 332. Accordingly, the third game image 330 having the aspect ratio of 32:9 may provide more information to a game content user than the second game image 320 having the aspect ratio of 21:9 or the first game image 310 having the aspect ratio of 16:9. When a game is played while watching a game image providing a wider FOV, a further vivid and immersive game may be played.

Referring to FIG. 3, even for same game content, a size and location of a sub window (e.g., a mini-map) may vary depending on an aspect ratio of a game image.

For example, when the display device 100 displays the first game image 310 having the aspect ratio of 16:9, a first mini-map 315 may be displayed at a first location in a first size, in the first game image 310.

The display device 100 may set the first mini-map 315 as a zoom-in or sharing area, based on a user input. Here, a specific object (e.g., a box frame) may be displayed in an area that is set as the zoom-in or sharing area. However, the disclosure is not limited thereto. When the first mini-map 315 is set as the zoom-in or sharing area, the display device 100 may display an image obtained by zooming in on the first mini-map 315 or share the same with the external device.

When an aspect ratio of a game image displayed on the display is changed, for example, when the first game image 310 of 16:9 is changed to the second game image 320 of 21:9, the display device 100 may display the second game image 320 having the aspect ratio of 21:9. A second mini-map 325 may be displayed at a second location in a second size, in the second game image 320. Here, a size and/or location of the second mini-map 325 may be different from a size and location of the first mini-map 315.

To reset the second mini-map 325 as the zoom-in or sharing area, the specific object displayed at a location of the first mini-map 315 may need to be moved to a location of the second mini-map 325.

Alternatively, when the second game image 320 of 21:9 is changed to the third game image 330 of 32:9, the display device 100 may display the third game image 330 having the aspect ratio of 32:9. A third mini-map 335 may be displayed at a third location in a third size, in the third game image 330. Here, a size and/or location of the third mini-map 335 may be different from a size and location of the second mini-map 325.

To reset the third mini-map 335 as the zoom-in or sharing area, the specific object displayed at a location of the second mini-map 325 may need to be moved to a location of the third mini-map 335.

Accordingly, the user may need to inconveniently reset the zoom-in or sharing area whenever an aspect ratio of a game image is changed, which may interfere with the game.

When received content is changed or an aspect ratio of an image is changed, the display device 100 according to an embodiment of the disclosure may automatically identify an area where specific information, such as a sub window, is displayed, from an image corresponding to changed content or an image having a changed aspect ratio. For example, when game content is changed, the display device 100 according to an embodiment of the disclosure may automatically identify a mini-map from an image corresponding to changed content. Alternatively, when an aspect ratio of a game image is changed, the display device 100 according to an embodiment of the disclosure may automatically identify a mini-map from an image having a changed aspect ratio.

Hereinafter, a method by which the display device 100 according to an embodiment of the disclosure automatically identifies a specific information area (or a specific object) will be described in detail with reference to the drawings.

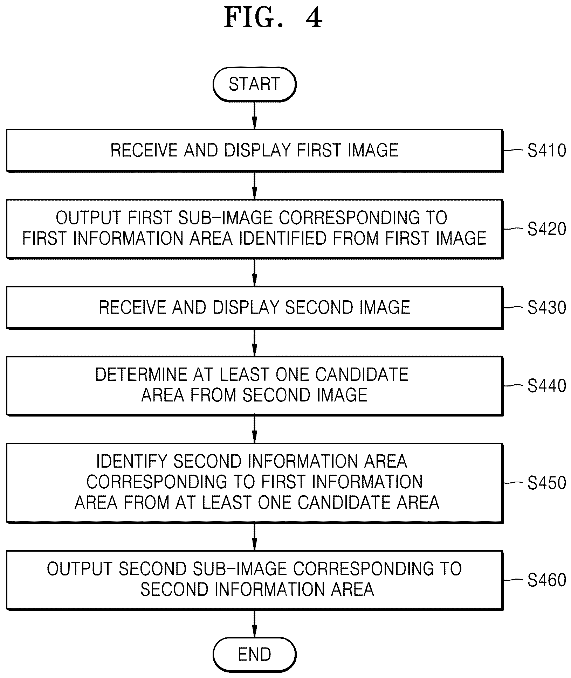

FIG. 4 is a flowchart of an operating method of the display device 100, according to an embodiment of the disclosure.

Referring to FIG. 4, the display device 100 according to an embodiment of the disclosure may receive and display a first image (operation S410).

For example, the display device 100 may receive first image content from the source device 200. The first image content according to an embodiment of the disclosure may include game content, movie content, music content, home training service content, or broadcast content. Hereinafter, an example in which the first image content is game content will be described.

The display device 100 may display the first image corresponding to the first image content. For example, the display device 100 may display a first game image.

The display device 100 may output a first sub-image corresponding to a first information area identified from the first image (operation S420).

For example, the display device 100 may identify the first information area included in the first game image. The first information area may be an area where at least one sub window included in the first game image is displayed. The display device 100 may identify, as the first information area, an area where at least one of a mini-map, a skill window, an item-related window, a character-related window, a chat window, or a control-related window, which are included in the first game image, is displayed. Also, the display device 100 may identify, as the first information area, an area where a specific object (e.g., a box frame) is displayed, based on a user input. However, the disclosure is not limited thereto.

The display device 100 according to an embodiment of the disclosure may display an image obtained by zooming in on the identified first information area. Alternatively, the display device 100 may transmit an image corresponding to the first information area to an external device to share the identified first information area with the external device.

The display device 100 according to an embodiment of the disclosure may receive and display a second image (operation S430).

For example, the display device 100 may receive second image content (game content) from the source device 200. Here, the second image content may be game content different from the first image content. When received game content is changed, the display device 100 may display a second game image corresponding to the changed game content.

The second image content may be same game content as the first image content but an aspect ratio of a game image corresponding to the game content may be different. For example, the first game image may have a first aspect ratio and the second game image may have a second aspect ratio different from the first aspect ratio. The display device 100 may display the second game image having the second aspect ratio.

The display device 100 according to an embodiment of the disclosure may determine at least one candidate area from the second image (operation S440). The at least one candidate area may refer to potential areas where at least one sub window included in the second game image may be displayed.

For example, the display device 100 may determine the at least one candidate area, based on first aspect ratio information of the first image, second aspect ratio information of the second image, and location information of the first information area. The display device 100 may determine, as the at least one candidate area, an area at a same location as the first information area identified from the first game image. Also, the display device 100 may determine, as the at least one candidate area, an area at the second location in the second game image, which corresponds to the first location of the first information area in the first game image, by using the first aspect ratio information and the second aspect ratio information. Also, when the first information area is located at a corner area of the first game image, the display device 100 may determine corner areas of the second game image as the at least one candidate area.

The display device 100 may determine the at least one candidate area, based on genre information, title information, or the like of the game content.

The display device 100 according to an embodiment of the disclosure may identify a second information area corresponding to the first information area, from the at least one candidate area (operation S450).

For example, the display device 100 may detect the second information area through image analysis on the at least one candidate area. The second information area having a corresponding shape and size may be detected from the at least one candidate area, based on a shape and size of the first information area. For example, when the first information area has a rectangular shape, the display device 100 may detect, from the at least one candidate area, an area (or an object) indicating a rectangular shape through edge detection using an edge detection algorithm. Alternatively, when the first information area has a circular shape, the display device 100 may detect, from the at least one candidate area, an area (or an object) having a circular shape by using a circle detection algorithm. However, the disclosure is not limited thereto.

The display device 100 according to an embodiment of the disclosure may detect or identify the second information area from the at least one candidate area, by using various object detection algorithms or filters. The second information area may be an area where at least one sub window included in the second game image is displayed.

Also, the display device 100 may detect the second information area from the at least one candidate area by using a neural network-based artificial intelligence (AI) technology.

When the at least one candidate area includes a plurality of candidate areas, the display device 100 according to an embodiment of the disclosure may determine priorities of the plurality of candidate areas. The priorities may be determined based on the location information of the first information area and content information of the second image content (e.g., when the second image content is game content, genre information of the game content). The display device 100 may detect the second information area from a candidate area with a high priority, according to the priorities.

When the second information area is identified, the display device 100 according to an embodiment of the disclosure may output a second sub-image corresponding to the second information area (operation S460).

For example, the display device 100 may display an image obtained by zooming in on the second information area. Also, the display device 100 may transmit an image corresponding to the second information area to the external device to share the identified second information area with the external device.

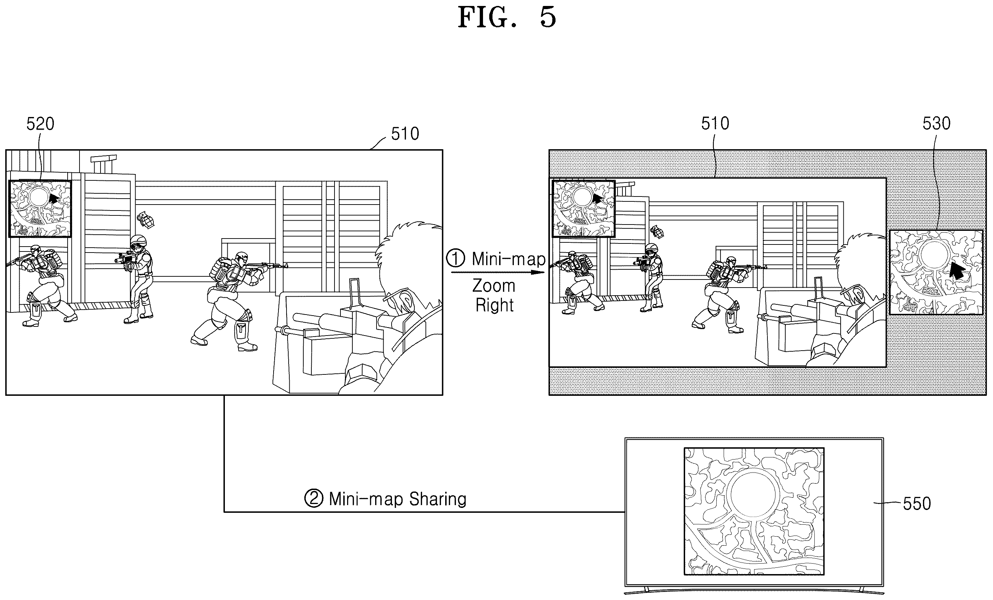

FIG. 5 is a diagram for describing an operation in which the display device 100 zooms in on or shares a partial area included in an image, according to an embodiment of the disclosure.

Referring to FIG. 5, the display device 100 according to an embodiment of the disclosure may receive game content from the source device 200 and display a game image 510 corresponding to the game content. The display device 100 may set a partial area of the game image 510 as a zoom-in or sharing area, based on a user input. For example, the display device 100 may display, on the game image 510, a specific object 520 (e.g., a box frame). The display device 100 may set the zoom-in or sharing area based on a user input of adjusting a size of the specific object 520 or by moving the specific object 520. For example, the display device 100 may set an area where a mini-map is displayed, as the zoom-in or sharing area, by locating the specific object 520 at the area where the mini-map is displayed. However, the disclosure is not limited thereto.

When the area where the mini-map is displayed (the specific object 520) is zoomed in, the display device 100 may display a zoom-in window 530 by zooming in on an image corresponding to the area where the mini-map is displayed (the specific object 520). Here, the zoom-in window 530 may be displayed in an area separate from the game image 510 and may be displayed in any one of left, right, top, and bottom areas of the game image 510.

Also, when the display device 100 shares the area where the mini-map is displayed (the specific object 520) with an external device 550, the image corresponding to the area where the mini-map is displayed (the specific object 520) may be transmitted to the external device 550. The external device 550 may display, on a display of the external device 550, the image received from the display device 100.

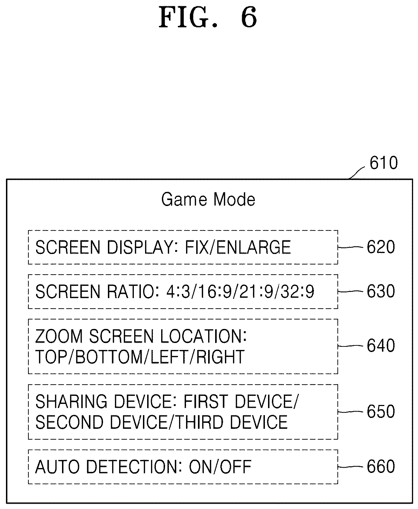

FIG. 6 is a diagram showing a user interface screen for setting a game mode of the display device 100, according to an embodiment of the disclosure.

Referring to FIG. 6, the display device 100 according to an embodiment of the disclosure may display a setting menu screen 610 for setting various functions provided in the game mode.

The setting menu screen 610 may include a menu 620 for determining whether to fix or enlarge a screen display and a menu 630 for setting a screen ratio (or an aspect ratio). Also, the setting menu screen 610 may include a menu 640 for setting a display location of a zoom screen. Here, the zoom screen may denote a window where an image obtained by zooming in on a partial area of a game image is displayed when a zoom function for zooming in on the partial area is performed. For example, the zoom screen may be displayed in any one of top, bottom, left, and right areas of the game image. However, the disclosure is not limited thereto.

The setting menu screen 610 may include a menu 650 for setting an external device with which the partial area is to be shared, when a function of sharing the partial area of the game image is performed.

Also, the setting menu screen 610 may include a menu 660 for setting on/off of an automatic detection function. The automatic detection function may denote a function of automatically detecting a changed information area when a location or size of the information area identified in an image is changed, for example, when image content displayed in the display device 100 is changed or an aspect ratio of the image is changed.

For example, in a case where the automatic detection function is turned on, when a first information area is identified from a first image based on a user input and the first image is changed to a second image while a zoom-in or sharing function is performed on the identified first information area, the display device 100 may automatically detect, from the second image, a second information area corresponding to the first information area.

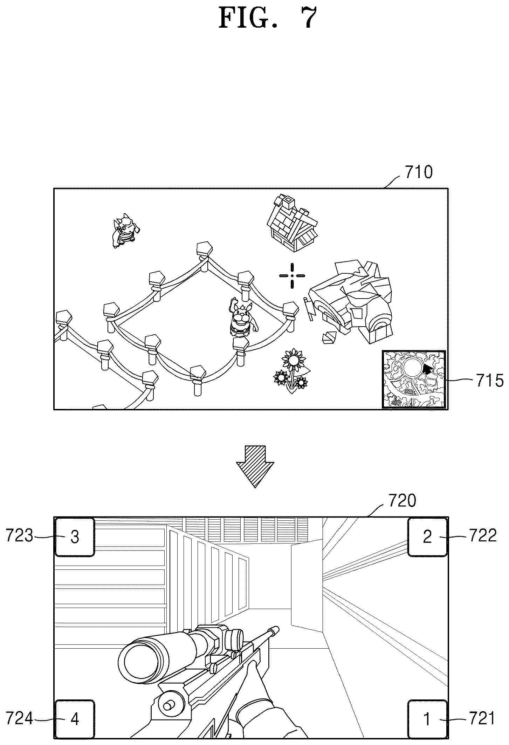

FIGS. 7 to 10 are diagrams for describing operations in which the display device 100 determines at least one candidate area, according to an embodiment of the disclosure.

FIG. 7 illustrates an operation of the display device 100 when image content is changed.

Referring to FIG. 7, the display device 100 according to an embodiment of the disclosure may receive first game content and display a first game image 710 corresponding to the first game content. Here, the first game image 710 may have an aspect ratio of 16:9. Also, the display device 100 may identify a first information area 715 (e.g., a first mini-map) from the first game image 710. For example, based on a user input of setting the first information area 715 as a zoom-in or sharing area, the first information area 715 may be identified from the first game image 710.

The display device 100 according to an embodiment of the disclosure may receive second game content different from the first game content and display a second game image 720 corresponding to the second game content. Here, the second game image 720 may have an aspect ratio of 16:9.

The display device 100 may identify, from the second game image 720, a second information area (e.g., a mini-map (second mini-map) of the second game content) corresponding to the first information area 715. For example, the display device 100 may determine at least one candidate area for detecting the second mini-map.

When a genre of the first game content and a genre of the second game content are the same and aspect ratios thereof are the same, the display device 100 may determine the at least one candidate area based on a location of the first mini-map, i.e., the first information area 715. For example, based on the first mini-map, i.e., the first information area 715 being located at a bottom right corner area of the first game image 710, the display device 100 may determine four corner areas 721 to 724 included in the second game image 720 as the candidate areas. Also, the display device 100 may assign high priority to a bottom right corner area 721 from among the four corner areas 721 to 724. For example, the display device 100 may detect the second mini-map corresponding to the first mini-map, i.e., the first information area 715 from the candidate areas in the order of the bottom right corner area 721, a top right corner area 722, a top left corner area 723, and a bottom left corner area 724.

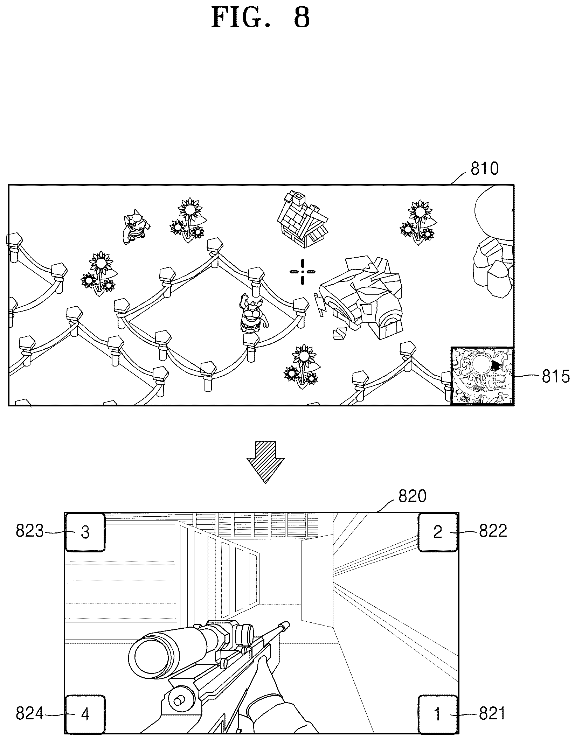

FIG. 8 is a diagram showing a case where a game image having an aspect ratio of 21:9 is changed to a game image having an aspect ratio of 16:9.

Referring to FIG. 8, the display device 100 according to an embodiment of the disclosure may receive first game content and display a first game image 810 corresponding to the first game content. Here, the first game image 810 may have an aspect ratio of 21:9. Also, the display device 100 may identify a first information area 815 (e.g., a first mini-map) from the first game image 810. For example, based on a user input of setting the first information area 815 as a zoom-in or sharing area, the first information area 815 may be identified from the first game image 810.

The display device 100 according to an embodiment of the disclosure may receive second game content and display a second game image 820 corresponding to the second game content. Here, the second game image 820 may have a different aspect ratio from the first game image 810. For example, the second game image 820 may have an aspect ratio of 16:9.

When an aspect ratio of a game image is changed, the display device 100 may determine at least one candidate area from the second game image 820, based on a first aspect ratio of the first game image 810, a second aspect ratio of the second game image 820, and a location of the first mini-map (the first information area 815).

For example, the display device 100 may obtain an area corresponding to the location of the first mini-map (the first information area 815) from the second game image 820, based on the first aspect ratio and the second aspect ratio. The display device 100 may identify the location of the first mini-map (the first information area 815) in the first game image 810, based on the first aspect ratio, and obtain a location in the second game image 820, which corresponds to the location of the first mini-map (the first information area 815), based on the second aspect ratio. The display device 100 may identify that the first mini-map (the first information area 815) is located in a bottom right corner area of the first game image 810, based on the first aspect ratio. The display device 100 may determine a bottom right corner area 821 of the second game image 820 based on the second aspect ratio, and determine the bottom right corner area 821 as at least one candidate area.

Also, the display device 100 may obtain four corner areas 821 to 824 of the second game image 820, based on the second aspect ratio, and determine the four corner areas 821 to 824 as the candidate areas. Also, the display device 100 may assign high priority to the bottom right corner area 821 from among the four corner areas 821 to 824. For example, the display device 100 may detect a second mini-map corresponding to the first mini-map, i.e., the first information area 815 from the candidate areas in the order of the bottom right corner area 821, a top right corner area 822, a top left corner area 823, and a bottom left corner area 824.

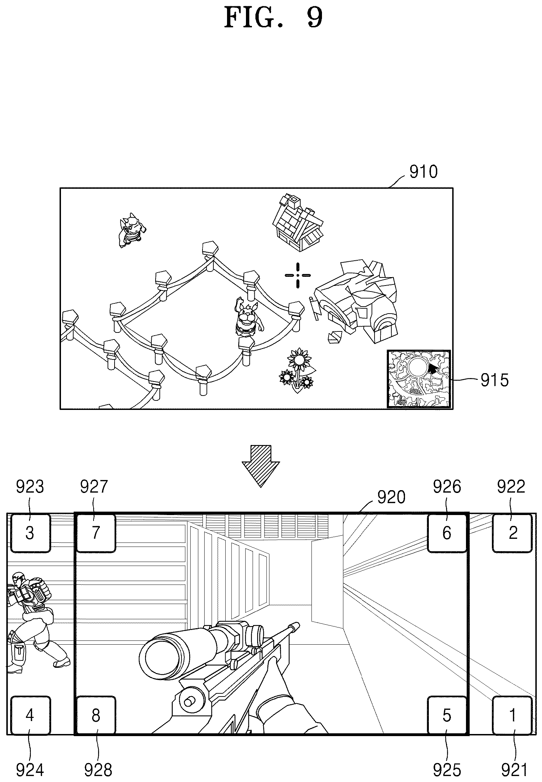

FIG. 9 is a diagram showing a case where a game image having an aspect ratio of 16:9 is changed to a game image having an aspect ratio of 21:9.

Referring to FIG. 9, the display device 100 according to an embodiment of the disclosure may receive first game content and display a first game image 910 corresponding to the first game content. Here, the first game image 910 may have an aspect ratio of 16:9. Also, the display device 100 may identify a first information area 915 (e.g., a first mini-map) from the first game image 910. For example, based on a user input of setting the first information area 915 as a zoom-in or sharing area, the first information area 915 may be identified from the first game image 910.

The display device 100 according to an embodiment of the disclosure may receive second game content and display a second game image 920 corresponding to the second game content. Here, the second game image 920 may have a different aspect ratio from the first game image 910. For example, the second game image 920 may have an aspect ratio of 21:9.

When an aspect ratio of a game image is changed, the display device 100 may determine at least one candidate area from the second game image 920, based on a first aspect ratio of the first game image 910, a second aspect ratio of the second game image 920, and a location of the first mini-map (the first information area 915).

For example, the display device 100 may obtain an area of a second location corresponding to a first location of the first mini-map (the first information area 915) from the second game image 920, based on the first aspect ratio and the second aspect ratio. The display device 100 may identify the first location of the first mini-map (the first information area 915) in the first game image 910, based on the first aspect ratio, and obtain the second location in the second game image 920, which corresponds to the first location of the first mini-map (the first information area 915), based on the second aspect ratio. The display device 100 may identify that the first mini-map (the first information area 915) is located in a bottom right corner area of the first game image 910, based on the first aspect ratio. The display device 100 may obtain a bottom right corner area 921 of the second game image 920 based on the second aspect ratio, and determine the bottom right corner area 921 as at least one candidate area.

The display device 100 may obtain four corner areas 921 to 924 of the second game image 920, based on the second aspect ratio (e.g., 21:9), and determine the four corner areas 921 to 924 as candidate areas.

Also, the display device 100 may obtain, in the second game image 920 based on the first aspect ratio, four corner areas 925 to 928 based on a 16:9 image, and determine the four corner areas 925 to 928 as candidate areas.

The display device 100 may determine priorities of the eight corner areas 921 to 928, based on the second aspect ratio (e.g., 21:9) and location information of the first mini-map (the first information area 915).

For example, the display device 100 may assign high priority to the bottom right corner area 921 in the second game image 920 having an aspect ratio of 21:9 from among the eight corner areas 921 to 928. For example, the display device 100 may detect a second mini-map corresponding to the first mini-map (the first information area 915) from the candidate areas in the order of the bottom right corner area 921, a top right corner area 922, a top left corner area 923, a bottom left corner area 924, which are in the second game image 920 having an aspect ratio of 21:9, a bottom right corner area 925, a top right corner area 926, a top left corner area 927, and a bottom left corner area 928, which are in the 16:9 image. However, the disclosure is not limited thereto.

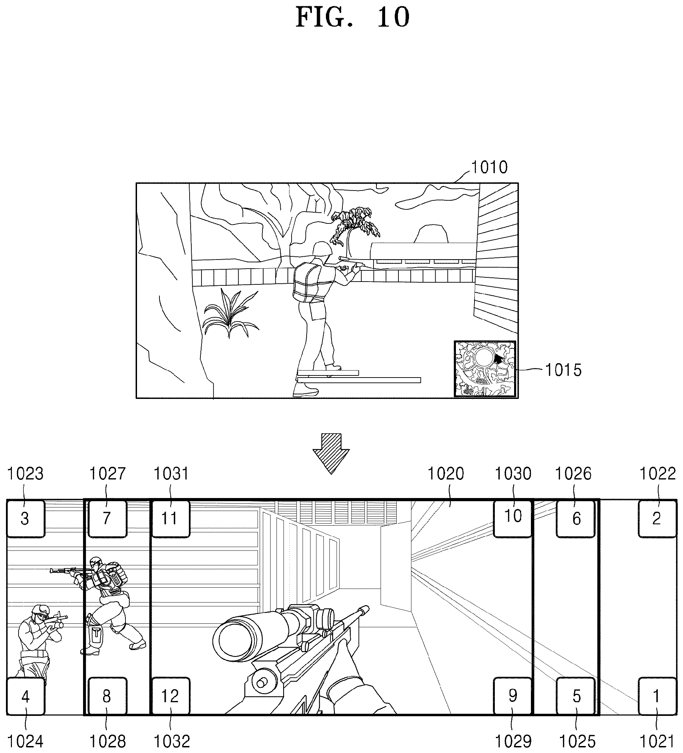

FIG. 10 is a diagram showing a case where a game image having an aspect ratio of 16:9 is changed to a game image having an aspect ratio of 32:9.

Referring to FIG. 10, a first game image 1010 may have an aspect ratio of 16:9 and a second game image 1020 may have an aspect ratio of 32:9.

The display device 100 may identify a location of a first mini-map 1015 in the first game image 1010, based on a first aspect ratio (16:9), and obtain a location in the second game image 1020, which corresponds to the first mini-map 1015, based on a second aspect ratio (32:9). The display device 100 may identify that the first mini-map 1015 is located in a bottom right corner area of the first game image 1010, based on the first aspect ratio. The display device 100 may obtain a bottom right corner area 1021 of the second game image 1020 based on the second aspect ratio, and determine the bottom right corner area 1021 as at least one candidate area.

The display device 100 may obtain four corner areas 1021 to 1024 of the second game image 1020, based on the second aspect ratio (32:9), and determine the four corner areas 1021 to 1024 as candidate areas.

Also, the display device 100 may obtain four corner areas 1025 to 1028 based on a 21:9 image, four corner areas 1029 to 1032 based on a 16:9 image, and determine the eight corner areas 1025 to 1032 as candidate areas.

Also, the display device 100 may determine priorities of the twelve corner areas 1021 to 1032 based on the second aspect ratio (e.g., 32:9) and location information of the first mini-map 1015.

For example, the display device 100 may assign high priority to the bottom right corner area 1021 in the second game image 1020 of 32:9 from among the twelve corner areas 1021 to 1032. For example, the display device 100 may detect a second mini-map corresponding to the first mini-map 1015 from the candidate areas in the order of the bottom right corner area 1021, a top right corner area 1022, a top left corner area 1023, a bottom left corner area 1024, which are in the second game image 1020 having an aspect ratio of 32:9, a bottom right corner area 1025, a top right corner area 1026, a top left corner area 1027, a bottom left corner area 1028, which are in the 21:9 image, a bottom right corner area 1029, a top right corner area 1030, a top left corner area 1031, and a bottom left corner area 1032, which are in the 16:9 image. However, the disclosure is not limited thereto.

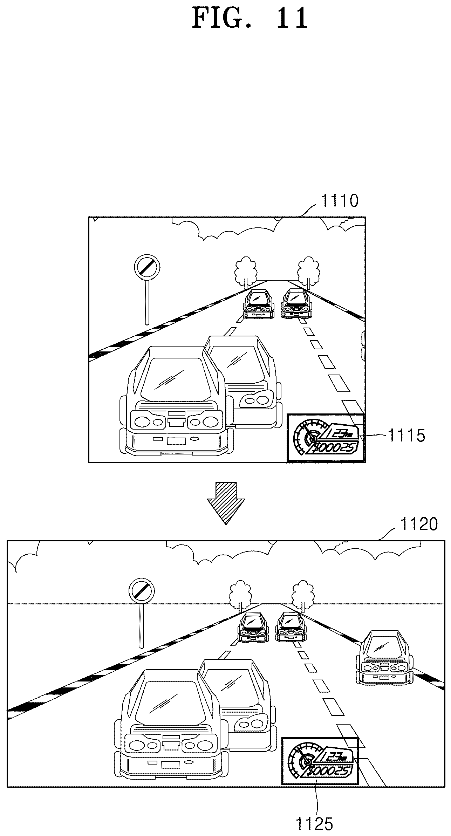

FIG. 11 is a diagram for describing an operation in which the display device 100 determines at least one candidate area, based on genre information of game content, according to an embodiment of the disclosure.

Referring to FIG. 11, the display device 100 according to an embodiment of the disclosure may receive first game content and display a first game image 1110 corresponding to the first game content. Here, the first game content may include a racing game, a driving game, or the like. The first game image 1110 may have a first aspect ratio (e.g., 16:9). Also, the display device 100 may identify a first information area 1115 (e.g., a speed display window or a control-related window) from the first game image 1110. For example, based on a user input of setting the first information area 1115 as a zoom-in or sharing area, the first information area 1115 may be identified from the first game image 1110.

The display device 100 according to an embodiment of the disclosure may display a second game image 1120 having a second aspect ratio (e.g., 21:9), based on an aspect ratio change request. When an aspect ratio of a game image is changed, the display device 100 may determine at least one candidate area based on genre information of the first game content, a type of the first information area 1115, and a location of the first information area 1115 in the first game image 1110.

For example, in the racing game or the driving game, the speed display window or the control-related window needs to be displayed at an existing location or displayed closer to a center of the game image even when an FOV is increased according to a change in the aspect ratio of the game image, so as to increase convenience of a game user.

Accordingly, the display device 100 may determine, as the at least one candidate area, an area 1125 of the second game image 1120, which is at a same location as the location of the first information area 1115 (the speed display window). However, the disclosure is not limited thereto.

The display device 100 according to an embodiment of the disclosure may obtain information about a location where a sub window is displayed for each genre of game content, information about a location where a sub window is displayed for each aspect ratio of an image corresponding to the game content, and the like, and store the same in a database. Here, the genre of game content may include a racing game, a shooting game, an action game, an adventure game, a simulation game, a role playing game, a sports game, or a first person shooting (FPS) game. Also, the sub window may include a mini-map, a skill window, an item-related window, a character-related window, a chat window, or a control-related window. The aspect ratio may include a value such as 4:3, 16:9, 16:10, 21:9, or 32:9. However, the disclosure is not limited thereto.

For example, the display device 100 may obtain information about a location where a first sub window (e.g., a mini-map) is displayed when game content of a first genre is displayed in a first game image having a first aspect ratio, and information about the location where the first sub window (e.g., the mini-map) is displayed when the game content of the first genre is displayed in a second game image having a second aspect ratio.

Also, the display device 100 may obtain information about a location where a second sub window (e.g., an item-related window) is displayed when the game content of the first genre is displayed in the first game image having the first aspect ratio, and information about the location where the second sub window (e.g., the item-related window) is displayed when the game content of the first genre is displayed in the second game image having the second aspect ratio.

Alternatively, the display device 100 may obtain information about a location where a first sub window (e.g., a mini-map) is displayed when game content of a second genre is displayed in a first game image having a first aspect ratio, and information about the location where the first sub window (e.g., the mini-map) is displayed when the game content of the second genre is displayed in a second game image having a second aspect ratio. Also, the display device 100 may obtain information about a location where a second sub window (e.g., an item-related window) is displayed when the game content of the second genre is displayed in the first game image having the first aspect ratio, and information about the location where the second sub window (e.g., the item-related window) is displayed when the game content of the second genre is displayed in the second game image having the second aspect ratio.

When game content is changed or an aspect ratio of a game image is changed while displaying a first game image, and thus, a second game image is displayed, the display device 100 may detect, from the second game image, a second information area corresponding to a first information area identified from the first game image, based on the above pieces of information.

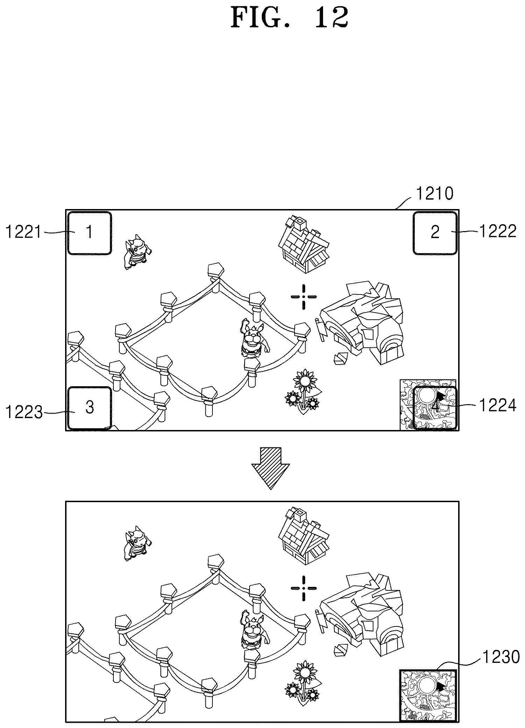

FIG. 12 is a diagram for describing an operation in which the display device 100 determines at least one candidate area, based on a user input, according to an embodiment of the disclosure.

Referring to FIG. 12, the display device 100 according to an embodiment of the disclosure may change a first game image including an identified first information area to a second game image 1210. The display device 100 may obtain a plurality of candidate areas for detecting, from the second game image 1210, a second information area corresponding to the first information area. Because this has been described in detail with reference to FIGS. 7 and 11, redundant descriptions will not be provided again.

When the plurality of candidate areas are obtained from the second game image 1210, the display device 100 may indicate numbers to the plurality of candidate areas. For example, as shown in FIG. 12, when four corner areas 1221 to 1224 of the second game image 1210 are obtained as the plurality of candidate areas, numbers 1 to 4 may be respectively indicated in the four corner areas 1221 to 1224.

When the numbers are indicated in the plurality of candidate areas (the four corner areas 1221 to 1224), a user may input a number corresponding to one of the plurality of candidate areas (the four corner areas 1221 to 1224) by using a number key included in a control device for remotely controlling the display device 100. Alternatively, the user may input, to the control device or the display device 100, a speech uttering a number corresponding to one of the plurality of candidate areas (the four corner areas 1221 to 1224). For example, the user may press a number key "4" included in the control device or utter a number "4".

The display device 100 may select one of the plurality of candidate areas (the four corner areas 1221 to 1224) based on a user input and detect the second information area from a selected candidate area.

For example, the display device 100 may detect a second information area 1230 corresponding to the first information area from a fourth candidate area (the corner area 1224) corresponding to the number "4".

Alternatively, the display device 100 may display a specific object in one of the plurality of candidate areas (the four corner areas 1221 to 1224) and select a candidate area where the specific object is displayed. The user may move the specific object displayed in the candidate area to another candidate area by using a direction key or the like included in the control device. For example, when input of a right direction key included in the control device is received while the specific object is displayed in a third candidate area (the corner area 1223), the display device 100 may move the specific object to and display the same in a fourth candidate area (the corner area 1222). Based on a user input, the display device 100 may select the fourth candidate area (the corner area 1224) where the specific object is displayed.

The display device 100 may detect the second information area 1230 from the fourth candidate area (the corner area 1224).

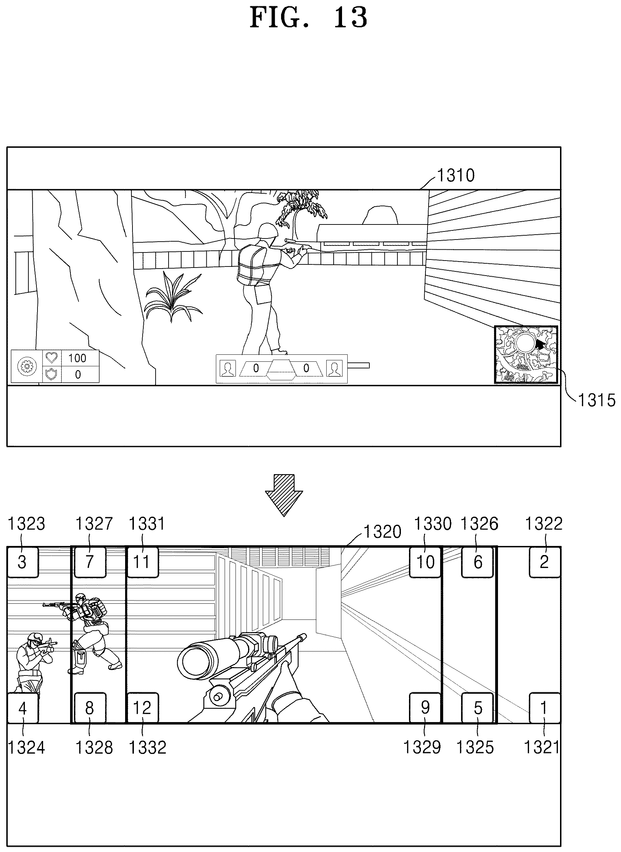

FIG. 13 is a diagram for describing an operation in which the display device 100 determines at least one candidate area, according to an embodiment of the disclosure.

FIG. 13 illustrates an operation of the display device 100 when a location of a game image displayed on a screen and an aspect ratio of the game image are changed.

Referring to FIG. 13, the display device 100 according to an embodiment of the disclosure may display a first game image 1310. Here, the first game image 1310 may have an aspect ratio of 21:9 and may be displayed in a center area of an entire screen.

The display device 100 may identify a first information area 1315 (e.g., a first mini-map) from the first game image 1310. For example, based on a user input of setting the first information area 1315 as a zoom-in or sharing area, the first information area 1315 may be identified from the first game image 1310.

The display device 100 according to an embodiment of the disclosure may display a second game image 1320 and here, the second game image 1320 may have an aspect ratio of 32:9 and may be displayed in an upper area of the entire screen. The display device 100 may identify, from the second game image 1320, a second information area (e.g., a mini-map (second mini-map) of second game content) corresponding to the first information area 1315.

The display device 100 may determine at least one candidate area for detecting the second mini-map, based on a location of the first game image 1310 displayed on the screen, the aspect ratio (21:9) of the first game image 1310, a location of the second game image 1320 displayed on the screen, and the aspect ratio (32:9) of the second game image 1320.

For example, the display device 100 may identify that the first mini-map (the first information area 1315) is located in a bottom right corner area of the first game image 1310, based on the location of the first game image 1310 displayed on the screen and the aspect ratio of the first game image 1310. The display device 100 may determine a bottom right corner area 1321 of the second game image 1320 and determine the bottom right corner area 1321 as at least one candidate area, based on the location of the second game image 1320 displayed on the screen and the aspect ratio of the second game image 1320.

Also, the display device 100 may obtain four corner areas 1321 to 1324 of the second game image 1320 and determine the four corner areas 1321 to 1324 as candidate areas, based on the location of the second game image 1320 displayed on the screen and the aspect ratio (32:9) of the second game image 1320.

Also, the display device 100 may obtain four corner areas 1325 to 1328 of a 21:9 image and four corner areas 1329 to 1332 of a 16:9 image, the 21:9 image and the 16:9 image corresponding to an area of the second game image 1320 displayed on the screen, and determine the eight corner areas 1325 to 1332 as candidate areas.

The display device 100 may assign priorities to the twelve corner areas 1321 to 1332 and detect the second mini-map corresponding to the first mini-map (the first information area 1315) from the candidate areas according to the priorities. The display device 100 may determine the priorities of the twelve corner areas 1321 to 1332, based on location information of the first mini-map (the first information area 1315), the aspect ratio (21:9) of the first game image 1310, and the aspect ratio (32:9) of the second game image 1320.

For example, the display device 100 may assign high priorities to bottom right corner areas from among the twelve corner areas 1321 to 1332, based on the location of the first mini-map (the first information area 1315). Also, the display device 100 may assign high priorities to corner areas based on the aspect ratio (32:9) of the second game image 1320.

For example, the display device 100 may detect the second mini-map corresponding to the first mini-map (the first information area 1315) from the candidate areas in the order of the bottom right corner area 1321, a top right corner area 1322, a top left corner area 1323, a bottom left corner area 1324, which are in the 32:9 image, a bottom right corner area 1325, a top right corner area 1326, a top left corner area 1327, a bottom left corner area 1328, which are in the 21:9 image, a bottom right corner area 1329, a top right corner area 1330, a top left corner area 1331, and a bottom left corner area 1332, which are in the 16:9 image. However, the disclosure is not limited thereto.

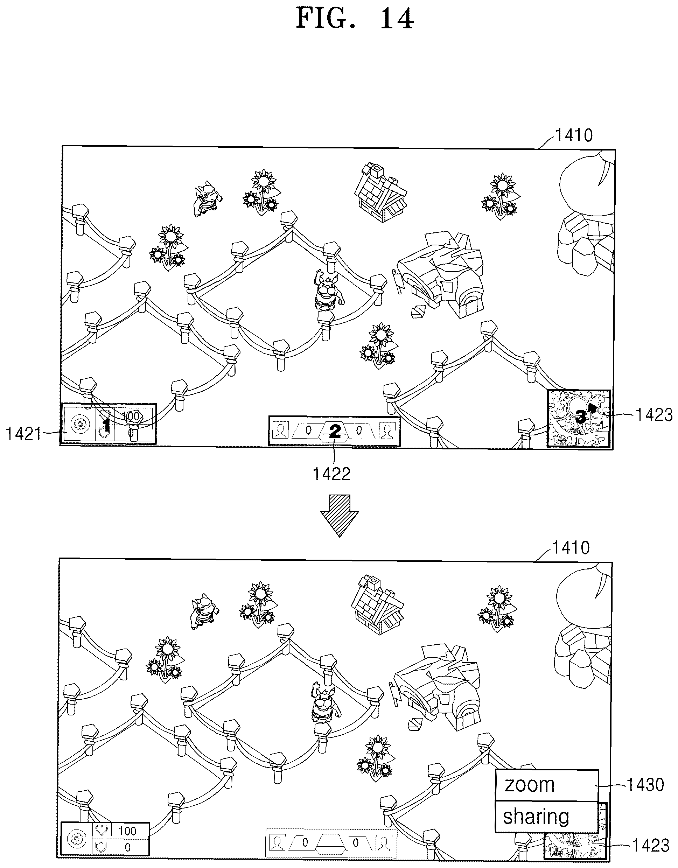

FIG. 14 is a diagram showing an operation in which the display device 100 identifies one of detected areas as an information area, according to an embodiment of the disclosure.

Referring to FIG. 14, the display device 100 may receive game content from the source device 200 and display a game image 1410 corresponding to the game content. The display device 100 may detect, from the game image 1410, an area where at least one sub window is displayed. For example, the display device 100 may detect a first area 1421 where a character-related window is displayed, a second area 1422 where an item-related window is displayed, and a third area 1423 where a mini-map is displayed.

The display device 100 may indicate numbers respectively to the first to third areas 1421 to 1423. For example, as shown in FIG. 14, a number "1" may be indicated in the first area 1421, a number "2" may be indicated in the second area 1422, and a number "3" may be indicated in the third area 1423.

When the numbers are indicated in the first to third areas 1421 to 1423, the user may input a number corresponding to one of the first to third areas 1421 to 1423 by using a number key included in the control device. Alternatively, the user may input, to the control device or the display device 100, a speech uttering a number corresponding to one of the first to third areas 1421 to 1423. For example, the user may press a number key "3" included in the control device or utter a number "3".

The display device 100 may select the third area 1423 based on a user input and identify the selected third area 1423 as an information area.

Alternatively, the display device 100 may display a specific object in one of the first to third areas 1421 to 1423 and select an area where the specific object is displayed. The user may move the specific object displayed in the area to another area by using a direction key or the like included in the control device. For example, when input of a right direction key included in the control device is received while the specific object is displayed in the second area 1422, the display device 100 may move the specific object to and display the same in the third area 1423. The display device 100 may select the third area 1423 where the specific object is displayed, based on a user input, and identify the selected third area 1423 as an information area.

Based on the third area 1423 being selected, the display device 100 may display a menu item 1430 for selecting a zoom-in function of zooming in on the third area 1423 or a sharing function of sharing the third area 1423 with an external device.

The display device 100 may display an image obtained by zooming in on the third area 1423, based on a user input of selecting the zoom-in function. Alternatively, the display device 100 may transmit an image corresponding to the third area 1423 to the external device, based on a user input of selecting the sharing function.

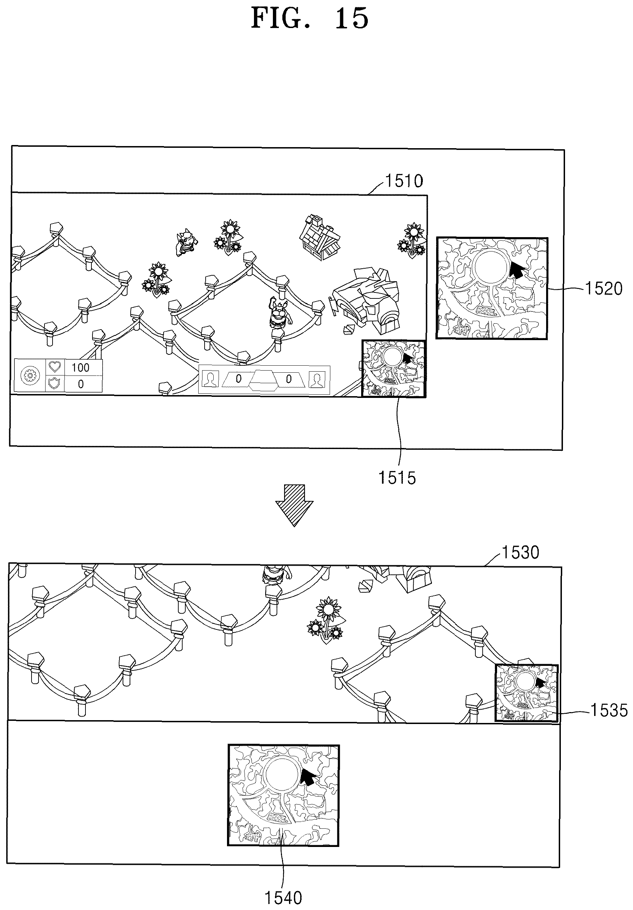

FIG. 15 is a diagram showing an operation of, when an aspect ratio of an image displayed on a display is changed, displaying an image obtained by zooming in on an identified information area, according to an embodiment of the disclosure.

Referring to FIG. 15, the display device 100 according to an embodiment of the disclosure may receive first game content from the source device 200 and display a first game image 1510 corresponding to the first game content. The first game image 1510 may have a first aspect ratio (e.g., 16:9). The display device 100 may identify a first mini-map 1515 as a first information area, from the first game image 1510. The display device 100 may display, on a zoom-in window 1520, an image obtained by zooming in on the identified first mini-map 1515, based on a user input. Here, the zoom-in window 1520 may be displayed in an area separate from the first game image 1510 and may be displayed in any one of left, right, top, and bottom areas of the first game image 1510. For example, the display device 100 may display the image obtained by zooming in on the first mini-map 1515, in the zoom-in window 1520 located at the right of the first game image 1510.

The display device 100 may change an aspect ratio of a game image being displayed, based on an aspect ratio change request. For example, the display device 100 may display a second game image 1530 having a second aspect ratio (e.g., 32:9).

The display device 100 may determine at least one candidate area from the second game image 1530 and detect a second mini-map 1535 (a second information area) corresponding to the first mini-map 1515 (the first information area) from the at least one candidate area. Because this has been described in detail with reference to FIGS. 4 and 14, redundant descriptions will not be provided again.

The display device 100 may display, in a zoom-in window 1540, an image obtained by zooming in on the identified second mini-map 1535. Here, the zoom-in window 1540 may be displayed in an area separate from the second game image 1530 and may be displayed in any one of left, right, top, and bottom areas of the second game image 1530. For example, the display device 100 may display the image obtained by zooming in on the second mini-map 1535, in the zoom-in window 1540 located at the bottom of the second game image 1530.

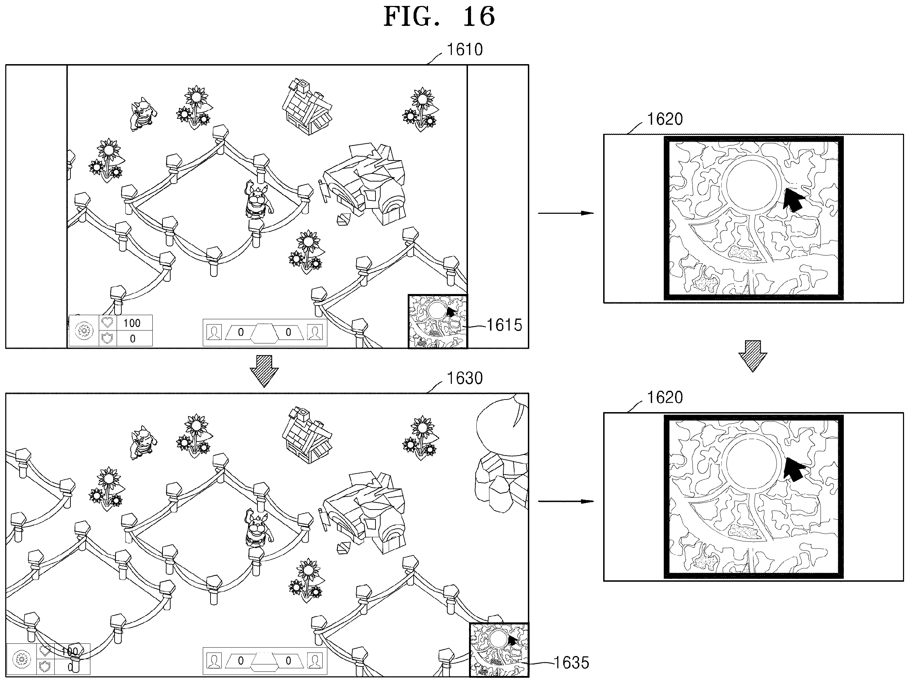

FIG. 16 is a diagram showing an operation of, when an image displayed on a display is changed, sharing an image corresponding to an identified information area with an external device, according to an embodiment of the disclosure.

Referring to FIG. 16, the display device 100 according to an embodiment of the disclosure may receive first game content from the source device 200 and display a first game image 1610 corresponding to the first game content. Here, the first game image 1610 may have a first aspect ratio (e.g., 16:9).

The display device 100 may identify a first mini-map 1615 as a first information area, from the first game image 1610. The display device 100 may transmit, to an external device 1620, an image obtained by zooming in on the identified first mini-map 1615, based on a user input. The display device 100 may transmit an image corresponding to the first mini-map 1615 to the external device 1620. The external device 1620 may display, on a display of the external device 1620, the image received from the display device 100.

The display device 100 may change an aspect ratio of a game image being displayed, based on an aspect ratio change request. For example, the display device 100 may display a second game image 1630 having a second aspect ratio (e.g., 21:9).

The display device 100 may determine at least one candidate area from the second game image 1630 and detect a second mini-map 1635 (a second information area) corresponding to the first mini-map 1615 (the first information area) from the at least one candidate area. Because this has been described in detail with reference to FIGS. 4 and 14, redundant descriptions will not be provided again.

The display device 100 may share, with the external device 1620, an image corresponding to the identified second mini-map 1635. The display device 100 may transmit the image corresponding to the second mini-map 1635 to the external device 1620. The external device 1620 may display, on the display of the external device 1620, the image received from the display device 100.

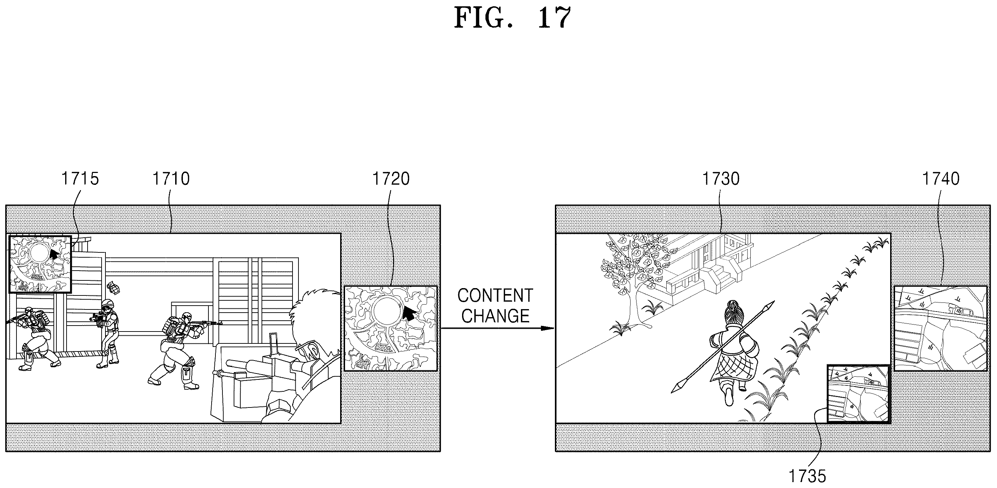

FIG. 17 is a diagram showing an operation of, when image content displayed on a display is changed, displaying an image obtained by zooming in on an identified information area, according to an embodiment of the disclosure.

Referring to FIG. 17, the display device 100 according to an embodiment of the disclosure may receive first game content from the source device 200 and display a first game image 1710 corresponding to the first game content.

The display device 100 may identify a first mini-map 1715 as a first information area, from the first game image 1710. The display device 100 may display, on a zoom-in window 1720, an image obtained by zooming in on the identified first mini-map 1715, based on a user input. Here, the zoom-in window 1720 may be displayed in an area separate from the first game image 1710 and may be displayed in any one of left, right, top, and bottom areas of the first game image 1710. For example, the display device 100 may display the image obtained by zooming in on the first mini-map 1715, in the zoom-in window 1720 located at the right of the first game image 1710.

The display device 100 may receive second game content from the source device 200 and display a second game image 1730 corresponding to the second game content. Here, the second game content may be different content from the first game content, and an aspect ratio of the first game image 1710 may be the same as an aspect ratio of the second game image 1730. However, the disclosure is not limited thereto.

The display device 100 may determine at least one candidate area from the second game image 1730 and detect a second mini-map 1735 (a second information area) corresponding to the first mini-map 1715 (the first information area) from the at least one candidate area. Because this has been described in detail with reference to FIGS. 4 and 14, redundant descriptions will not be provided again.

The display device 100 may display, in a zoom-in window 1740, an image obtained by zooming in on the identified second mini-map 1735. Here, the zoom-in window 1740 may be displayed in an area separate from the second game image 1730 and may be displayed in any one of left, right, top, and bottom areas of the second game image 1730. For example, the display device 100 may display the image obtained by zooming in on the second mini-map 1735, in the zoom-in window 1740 located at the right of the second game image 1730.

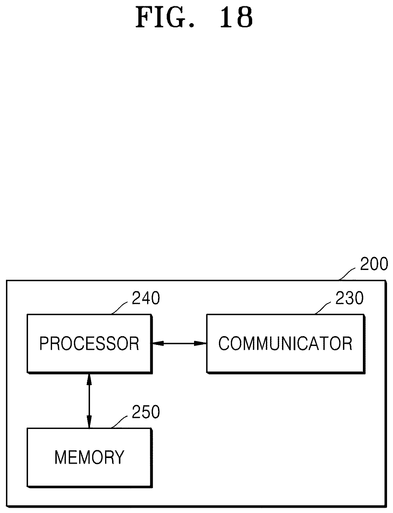

FIG. 18 is a block diagram of a configuration of the source device 200, according to an embodiment of the disclosure.

Referring to FIG. 18, the source device 200 according to an embodiment of the disclosure may include a communicator 230, a processor 240, and a memory 250.

The communicator 230 according to an embodiment of the disclosure may receive or transmit content by performing communication connection between the source device 200 and an external device (e.g., the display device 100). For example, the communicator 230 may perform communication with the external device through a wired or wireless communication network. The communicator 230 may include at least one port to be connected to the external device via a wired cable to communicate with the external device via wires. For example, the communicator 230 may include at least one of a HDMI port, a mobile high-definition link (MHL) port, a universal serial bus (USB) port, a display port (DP), a thunderbolt port, a video graphics array (VGA) port, a red, green, and blue (RGB) port, a D-subminiature (D-SUB), a digital visual interface (DVI), a component jack, or a PC port. The communicator 230 may perform communication with the external device connected via wires through the at least one port.

The communicator 230 may include at least one of a wireless communication module, a wireless communication circuit, or a wireless communication device for performing wireless communication with the external device. For example, the communicator 230 may include at least one communication module performing communication according to communication standards, such as Bluetooth, Wi-Fi, BLE, NFC/RFID, Wi-Fi direct, UWB, ZigBee, Internet, 3G, 4G, 5G, and/or 6G. However, the disclosure is not limited thereto, and a configuration and operations of the communicator 230 may vary according to an embodiment of the disclosure.

For example, the communicator 230 may be connected to the display device 100 to receive EDID information of the display device 100 from the display device 100 and output content to the display device 100.

The processor 240 according to an embodiment of the disclosure may control general operations of the source device 200. In detail, the processor 240 may control an operation in which a content image being reproduced by the source device 200 is output to the display device 100.

The processor 240 may execute one or more programs stored in the memory 250. The memory 250 according to an embodiment of the disclosure may store various types of data, programs, or applications for driving and controlling the source device 200.

Also, the program stored in the memory 250 may include one or more instructions. The program (one or more instructions) or application stored in the memory 250 may be executed by the processor 240.

The source device 200 according to an embodiment of the disclosure may receive content transmitted from the external device or an external server. The source device 200 may receive content from an external recording medium, such as a USB memory or an HDD. Alternatively, the source device 200 may read, from an optical disk, such as a DVD or a Blu-ray disk, content recorded on the optical disk.

The processor 240 according to an embodiment of the disclosure may execute the one or more instructions stored in the memory 250 to reproduce content, and may be implemented in any form according to an embodiment of the disclosure. For example, the processor 240 may perform processing on content data received by the source device 200.

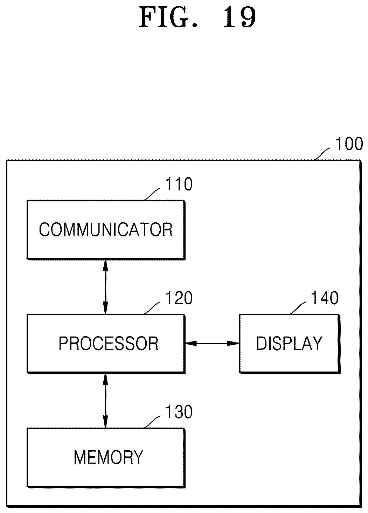

FIG. 19 is a block diagram of a configuration of the display device 100, according to an embodiment of the disclosure.

Referring to FIG. 19, the display device 100 according to an embodiment of the disclosure may include a communicator 110, a processor 120, a memory 130, and a display 140.

The communicator 110 according to an embodiment of the disclosure may transmit and receive data or a signal to and from the external device (e.g., the source device 200) or a server. For example, the communicator 110 may perform communication with the external device through a wired or wireless communication network. The communicator 110 may include at least one port to be connected to the external device via a wired cable to communicate with the external device via wires. For example, the communicator 110 may include at least one of a HDMI port, an MHL port, a USB port, a DP, a thunderbolt port, a VGA port, an RGB port, a D-SUB, a DVI, a component jack, or a PC port. The communicator 110 may perform communication with the external device connected via wires through the at least one port.

The communicator 110 may include a Wi-Fi module, a Bluetooth module, an infrared communication module, a wireless communication module, a local area network (LAN) module, or an Ethernet module. Here, each communication module may be implemented in the form of at least one hardware chip.

The Wi-Fi module and the Bluetooth module may communicate through a W-Fi method and a Bluetooth method, respectively. When the Wi-Fi module or the Bluetooth module is used, various types of connection information, such as SSID or a session key, may be transmitted or received first, communication may be connected by using the same, and then various types of information may be transmitted or received. The wireless communication module may include at least one communication chip performing communication according to various wireless communication standards, such as ZigBee, 3G, 3GPP, LTE, LTE-A, 4G, and 5G.

The communicator 110 according to an embodiment of the disclosure may request the source device 200 for content (e.g., game content). Also, the communicator 110 may provide EDID to the source device 200.

The communicator 110 may receive content from the source device 200. Even for same content, the communicator 110 may receive images having various aspect ratios.

The processor 120 according to an embodiment of the disclosure controls general operations of the display device 100 and a signal flow between internal components of the display device 100, and performs a function of processing data.

The processor 120 may include a single core, a dual core, a triple core, a quad core, or a multiple core. Also, the processor 120 may include a plurality of processors. For example, the processor 120 may be implemented by a main processor and a sub processor.

Also, the processor 120 may include at least one of a central processing unit (CPU), a graphics processing unit (GPU), or a video processing unit (VPU). Alternatively, according to an embodiment of the disclosure, the processor 120 may be implemented in the form of a system on chip (SoC) in which at least one of CPU, GPU, or VPU is integrated. Alternatively, the processor 120 may further include a neural processing unit (NPU).

The memory 130 according to an embodiment of the disclosure may store various types of data, programs, or applications for driving and controlling the display device 100.

Also, the program stored in the memory 130 may include one or more instructions. The program (one or more instructions) or application stored in the memory 130 may be executed by the processor 120 to perform various functions. It should be understood that the processor may perform these functions either directly through an operation of the processor, or indirectly by controlling another component or device to execute these functions.

The processor 120 according to an embodiment of the disclosure may execute the one or more instructions stored in the memory 130 to receive and display a first image. For example, the processor 120 may display the first image corresponding to first image content received from the source device 200. The first image content according to an embodiment of the disclosure may include game content, movie content, music content, home training service content, or broadcast content. For example, the processor 120 may display a first game image corresponding to first game content.

The processor 120 may execute the one or more instructions stored in the memory 130 to output a first sub-image corresponding to a first information area identified from the first image. For example, the processor 120 may identify the first information area included in the first game image. The first information area may be an area where at least one sub window included in the first game image is displayed. The processor 120 may identify, as the first information area, an area where at least one of a mini-map, a skill window, an item-related window, a character-related window, a chat window, or a control-related window, which are included in the first game image, is displayed. Also, the processor 120 may identify, as the first information area, an area where a specific object (e.g., a box frame) is displayed, based on a user input. However, the disclosure is not limited thereto.

The processor 120 according to an embodiment of the disclosure may display an image obtained by zooming in on the identified first information area. Alternatively, the processor 120 may transmit an image corresponding to the first information area to an external device to share the identified first information area with the external device.

The processor 120 according to an embodiment of the disclosure may execute the one or more instructions stored in the memory 130 to receive and display a second image. For example, the processor 120 may display a second game image corresponding to second image content (game content) received from the source device 200. Here, the second image content may be game content different from the first image content. When received game content is changed, the processor 120 may display the second game image corresponding to the changed game content.

The second image content may be a same game content as the first image content but an aspect ratio of a game image corresponding to the game content may be different. For example, the first game image may have a first aspect ratio and the second game image may have a second aspect ratio different from the first aspect ratio. The processor 120 may display the second game image having the second aspect ratio.

The processor 120 according to an embodiment of the disclosure may execute the one or more instructions stored in the memory 130 to determine at least one candidate area from the second image. For example, the processor 120 may determine the at least one candidate area, based on first aspect ratio information of the first image, second aspect ratio information of the second image, and location information of the first information area. The processor 120 may determine, as the at least one candidate area, an area at a same location as the first information area identified from the first game image. Also, the processor 120 may determine, as the at least one candidate area, an area at the second location in the second game image, which corresponds to the first location of the first information area in the first game image, by using the first aspect ratio information and the second aspect ratio information. Also, when the first information area is located at a corner area of the first game image, the processor 120 may determine corner areas of the second game image as the at least one candidate area.

The processor 120 may determine the at least one candidate area, based on genre information, title information, or the like of the game content.

The processor 120 according to an embodiment of the disclosure may execute the one or more instructions stored in the memory 130 to identify a second information area corresponding to the first information area from the at least one candidate area.

For example, the processor 120 may detect the second information area through image analysis on the at least one candidate area. The second information area having a corresponding shape and size may be detected from the at least one candidate area, based on a shape and size of the first information area. For example, when the first information area has a rectangular shape, the processor 120 may detect, from the at least one candidate area, an area (or an object) indicating a rectangular shape through edge detection using an edge detection algorithm. Alternatively, when the first information area has a circular shape, the processor 120 may detect, from the at least one candidate area, an area (or an object) having a circular shape by using a circle detection algorithm. However, the disclosure is not limited thereto.

The processor 120 according to an embodiment of the disclosure may detect or identify the second information area from the at least one candidate area, by using various object detection algorithms or filters.

Also, the processor 120 may detect the second information area from the at least one candidate area by using a neural network-based AI technology.

When the at least one candidate area includes a plurality of candidate areas, the processor 120 according to an embodiment of the disclosure may determine priorities of the plurality of candidate areas. The priorities may be determined based on the location information of the first information area and content information of the second image content (e.g., when the second image content is game content, genre information of the game content). The processor 120 may detect the second information area from a candidate area with a high priority, according to the priorities.

The processor 120 according to an embodiment of the disclosure may execute the one or more instructions stored in the memory 130 to output a second sub-image corresponding to the second information area identified from the second image. For example, the processor 120 may display an image obtained by zooming in on the second information area. Also, the processor 120 may transmit an image corresponding to the second information area to the external device to share the identified second information area with the external device.

The display 140 according to an embodiment of the disclosure may generate a driving signal by converting an image signal, data signal, on-screen display (OSD) signal, or control signal processed by the processor 120. The display 240 may be implemented as a plasma display panel (PDP), a liquid crystal display (LCD), an organic light-emitting display (OLED), or a flexible display, or may be implemented as a 3-dimensional (3D) display. The display 140 may be configured as a touch screen to be used as an input device as well as an output device.

The display 140 according to an embodiment of the disclosure may display the first image corresponding to the first image content received from the source device 200 and the second image corresponding to the second image content. Also, the display 140 may display a zoom-in image obtained by zooming in on the first information area identified from the first image. Also, the display 140 may display a zoom-in image obtained by zooming in on the second information area identified from the second image.

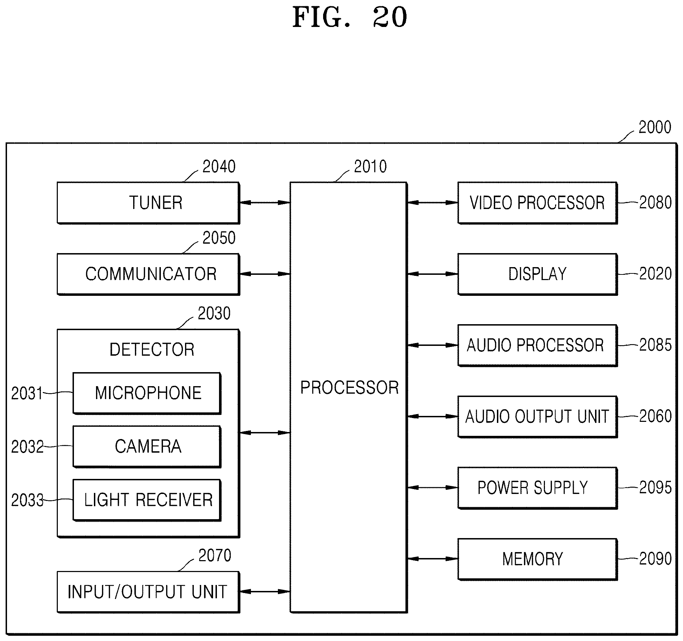

FIG. 20 is a block diagram of a configuration of the display device 2000, according to an embodiment of the disclosure.

The display device 2000 of FIG. 20 may be an example of the display device 100 described with reference to FIGS. 1 through 17.

Referring to FIG. 20, the display device 2000 according to an embodiment of the disclosure may include a tuner 2040, a processor 2010, a display 2020, a communicator 2050, a detector 2030, an input/output unit 2070, a video processor 2080, an audio processor 2085, an audio output unit 2060, a memory 2090, and a power supply 2095.

The communicator 2050 and the input/output unit 2070 of FIG. 20 may correspond to the communicator 110 of FIG. 19, the processor 2010 of FIG. 20 may correspond to the processor 120 of FIG. 19, the memory 2090 of FIG. 20 may correspond to the memory 130 of FIG. 19, and the display 2020 of FIG. 20 may correspond to the display 140 of FIG. 19. Accordingly, redundant details that have been described above are omitted.

The tuner 2040 according to an embodiment of the disclosure may tune and select only a frequency of a channel to be received by the display device 2000 among many radio wave components by performing amplification, mixing, and resonance on a broadcast signal received via wires or wirelessly. The broadcast signal includes audio, video, and additional information (for example, an electronic program guide (EPG)).

The tuner 2040 may receive a broadcast signal from various sources, such as terrestrial broadcasting, cable broadcasting, satellite broadcasting, and Internet broadcasting. The tuner 2040 may receive a broadcast signal from a source such as analog broadcasting or digital broadcasting.

The communicator 2050 according to an embodiment of the disclosure may receive, from an external control device, a control signal or a control command. For example, the communicator 2050 may include an infrared (IR) module configured to transmit and receive a signal to and from the external control device according to IR communication standards. In detail, the communicator 2050 may receive, from a control device, a control signal or a control command corresponding to a user input (e.g., a key or button input of the control device).

The detector 2030 according to an embodiment of the disclosure may detect a speech of a user, an image of the user, or an interaction of the user, and may include a microphone 2031, a camera 2032, and a light receiver 2033.

A microphone 2031 receives voice uttered by the user. The microphone 2031 may convert the received voice into an electric signal and output the electric signal to the processor 2010. The user's voice may include, for example, voice corresponding to a menu or function of the display device 2000. For example, the microphone 2031 may receive the user's speech corresponding to a rotation command of the display 2020, convert the received speech into an electric signal, and output the electric signal to the processor 2010.

The camera 2032 may receive an image (for example, consecutive frames) corresponding to motion of the user including a gesture within a camera recognition range. The processor 2010 may select a menu displayed on the display device 2000 by using a result of recognizing the received motion or perform control corresponding to the result. For example, the processor 2010 may receive an image from the camera 2032, recognize the user's motion corresponding to rotation of the display 2020 from the received image, and rotate the display 2020, based on the recognized user's motion.

The light receiver 2033 receives an optical signal (including a control signal) received from an external control apparatus via a light window of a bezel of the display 2020. The light receiver 2033 may receive an optical signal corresponding to a user input (for example, touch, press, touch gesture, voice, or motion) from a control apparatus. A control signal may be extracted from the received light signal under control of the processor 2010.

The input/output unit 2070 according to an embodiment of the disclosure may receive video (e.g., a moving image), audio (e.g., speech or music), and additional information (e.g., electronic program guide (EPG)) from the outside of the display device 2000. The input/output unit 2070 may include any one of a HDMI, an MHL, a USB, a DP, a thunderbolt, a VGA port, an RGB port, a D-SUB, a DVI, a component jack, and a PC port.

The processor 2010 controls general operations of the display device 2000 and a signal flow between the display device 2000 and internal components, and performs a function of processing data. When there is a user input or a pre-set and stored condition is satisfied, the processor 2010 may execute an operation system (OS) and various applications stored in the memory 2090.

The processor 2010 may include random access memory (RAM) storing a signal or data input from the outside of the display device 2000 or used as a storage area corresponding to various tasks performed by the display device 2000, read-only memory (ROM) storing a control program for control by the display device 2000, and a processor.

The video processor 2080 performs processes on video data received by the display device 2000. The video processor 2080 may perform various image processes, such as decoding, scaling, noise removal, frame rate converting, and resolution converting, on the video data.

The audio processor 2085 performs a process on audio data. The audio processor 2085 may perform various processes, such as decoding, amplification, or noise removal, on the audio data. The audio processor 2085 may include a plurality of audio processing modules to process audio corresponding to a plurality of pieces of content.

The audio output unit 2060 outputs audio included in a broadcast signal received via the tuner 2040 under control by the processor 2010. The audio output unit 2060 may output the audio (for example, voice or sound) input via the communicator 2050 or the input/output unit 2070. Also, the audio output unit 2060 may output audio stored in the memory 2090 under control by the processor 2010. The audio output unit 2060 may include at least one of a speaker, a headphone output terminal, or a Sony/Philips digital interface (S/PDIF) terminal.

The power supply 2095 supplies power input from an external power source to components inside the display device 2000 under control by the processor 2010. Also, the power supply 2095 may supply power output from one or more batteries (not shown) located inside the display device 2000 to the components inside the display device 2000 under control by the processor 2010.

The memory 2090 may store various types of data, programs, or applications for driving and controlling the display device 2000 under control by the processor 2010. The memory 2090 may include a broadcast receiving module, a channel control module, a volume control module, a communication control module, a voice recognition module, a motion recognition module, a light receiving module, a display control module, an audio control module, an external input control module, a power control module, a power control module of an external apparatus connected wirelessly (for example, Bluetooth), a voice database (DB), or a motion DB. Modules and DBs of the memory 2090 may be implemented in the form of software to perform a broadcast receiving control function, a channel control function, a volume control function, a communication control function, a voice recognition function, a motion recognition function, a light receiving control function, a display control function, an audio control function, an external input control function, a power control function, or power control function of an external device connected wirelessly (for example, Bluetooth), in the display device 2000. The processor 2010 may perform each function by using the software stored in the memory 2090.

The block diagram of the source device 200 shown in FIG. 18, and the display devices 100 and 2000 shown in FIGS. 19 and 20 are block diagrams according to an embodiment of the disclosure. The components in the block diagrams may be integrated, a component may be added, or the component may be omitted based on the specifications of the source device 200 and the display device 100 and 2000. In other words, two or more components may be integrated into one component or one component may be divided into two or more components when necessary. Also, a function performed by each block is only for describing embodiments of the disclosure and specific operations or devices do not limit the scope of right of the disclosure.

A display device according to an embodiment of the disclosure may include a display, a memory storing one or more instructions, and at least one processor configured to execute the one or more instructions.

The at least one processor may be configured to execute the one or more instructions to display a first image based on receiving the first image.

The at least one processor may be configured to execute the one or more instructions to output a first sub-image corresponding to a first information area identified from the first image.

The at least one processor may be configured to execute the one or more instructions to display a second image based on receiving the second image different from the first image.

The at least one processor may be configured to execute the one or more instructions to determine a plurality of candidate areas from the second image, based on first aspect ratio information of the first image, second aspect ratio information of the second image, and location information of the first information area.

The at least one processor may be configured to execute the one or more instructions to determine priorities of the plurality of candidate areas based on the location information of the first information area and the second aspect ratio information.

The at least one processor may be configured to execute the one or more instructions to identify, based on the priorities, a second information area corresponding to the first information area from the plurality of candidate areas.

The at least one processor may be configured to execute the one or more instructions to output a second sub-image corresponding to the second information area.

First image content corresponding to the first image and second image content corresponding to the second image may be different pieces of content.

A first aspect ratio of the first image and a second aspect ratio of the second image may be different from each other.

The at least one processor may be further configured to execute the one or more instructions to determine, as one candidate area from among the plurality of candidate areas, an area in the second image, which is at a same location as the first information area.

The at least one processor may be further configured to execute the one or more instructions to determine, as one candidate area from among the plurality of candidate areas, an area at a second location in the second image, which corresponds to a first location of the first information area in the first image.

The at least one processor may be further configured to execute the one or more instructions to determine, as one candidate area from among the plurality of candidate areas, a corner area of the second image having the second aspect ratio, based on the first information area being located in a corner area of the first image having the first aspect ratio.

The at least one processor may be further configured to execute the one or more instructions to control the display to display the plurality of candidate areas.

The at least one processor may be further configured to execute the one or more instructions to receive a user input of selecting one of the plurality of candidate areas.

The at least one processor may be further configured to execute the one or more instructions to detect, based on the user input, the second information area corresponding to the first information area from the selected candidate area.

At least one candidate area may include the plurality of candidate areas.

The at least one processor may be further configured to execute the one or more instructions to detect a plurality of information areas from the plurality of candidate areas.

The at least one processor may be further configured to execute the one or more instructions to control the display to display the detected plurality of information areas.

The at least one processor may be further configured to execute the one or more instructions to receive a user input of selecting one of the plurality of information areas.

The at least one processor may be further configured to execute the one or more instructions to identify the selected information area as the second information area, based on the user input.

The first sub-image may include an image obtained by zooming-in the first information area.

The second sub-image may include an image obtained by zooming-in the second information area.

The at least one processor may be further configured to execute the one or more instructions to control the display to display the first sub-image or the second sub-image.

The at least one processor may be further configured to execute the one or more instructions to output the first sub-image or the second sub-image to an external device.

The at least one processor may be further configured to execute the one or more instructions to determine the plurality of candidate areas from the second image, based on at least one of content information of the second image or location information about where the second image is displayed.

The first image and the second image may each include a game image corresponding to game content.

The first information area and the second information area may each include at least one of a mini-map, a skill window, an item-related window, a character-related window, a chat window, or a control-related window, which are included in the game image.

An operating method of a display device, according to an embodiment of the disclosure, may include displaying a first image based on receiving the first image.

The operating method of the display device, according to an embodiment of the disclosure, may include outputting a first sub-image corresponding to a first information area identified from the first image.

The operating method of the display device, according to an embodiment of the disclosure, may include displaying a second image based on receiving the second image different from the first image.

The operating method of the display device, according to an embodiment of the disclosure, may include determining a plurality of candidate areas from the second image, based on first aspect ratio information of the first image, second aspect ratio information of the second image, and location information of the first information area.

The operating method of the display device, according to an embodiment of the disclosure, may include determining priorities of the plurality of candidate areas based on the location information of the first information area and the second aspect ratio information.

The operating method of the display device, according to an embodiment of the disclosure, may include identifying, based on the priorities, a second information area corresponding to the first information area from the plurality of candidate areas.

The operating method of the display device, according to an embodiment of the disclosure, may include outputting a second sub-image corresponding to the second information area.

First image content corresponding to the first image and second image content corresponding to the second image may be different pieces of content.

A first aspect ratio of the first image and a second aspect ratio of the second image may be different from each other.

The determining of the plurality of candidate areas may include determining, as one candidate area from among the plurality of candidate areas, an area in the second image, which is at a same location as the first information area.

The determining of the plurality of candidate areas may include determining, as one candidate area from among the plurality of candidate areas, an area at a second location in the second image, which corresponds to a first location of the first information area in the first image.

The determining of the plurality of candidate areas may include determining, as one candidate area from among the plurality of candidate areas, a corner area of the second image having the second aspect ratio, based on the first information area being located in a corner area of the first image having the first aspect ratio.

The operating method of the display device, according to an embodiment of the disclosure, may further include displaying the plurality of candidate areas.

The operating method of the display device, according to an embodiment of the disclosure, may further include receiving a user input of selecting one of the plurality of candidate areas.

The operating method of the display device, according to an embodiment of the disclosure, may further include detecting, based on the user input, the second information area corresponding to the first information area from the selected candidate area.

The first sub-image may include an image obtained by zooming-in the first information area.

The second sub-image may include an image obtained by zooming-in the second information area.

The outputting of the first sub-image or the outputting of the second sub-image may include displaying the first sub-image or the second sub-image.

The outputting of the first sub-image or the outputting of the second sub-image may include outputting the first sub-image or the second sub-image to an external device.

A display device according to an embodiment of the disclosure is able to automatically detect (recognize) a specific information area even when image content is changed or an aspect ratio of an image is changed, and thus, usability may be improved.

Also, the display device according to an embodiment of the disclosure is able to provide an automatic recognition function for user preferred information in image content (e.g., game content), and thus, various viewing environments may be provided.

A specific information area in a game image may be zoomed in on, and even when game content is changed or an aspect ratio of the game image is changed while a function of sharing with an external device is used, the specific information area may be zoomed in on or shared continuously without a separating setting, and thus, immersion in a game may be improved.

The operating method of the display device, according to an embodiment of the disclosure, may be recorded on a computer-readable recording medium by being implemented in the form of program commands executed by using various computers. The computer-readable recording medium may include at least one of a program command, a data file, or a data structure. The program commands recorded in the computer-readable recording medium may be specially designed or well known to one of ordinary skill in the computer software field. Examples of the computer-readable recording medium include magnetic media such as hard disks, floppy disks, and magnetic tapes, optical media such as CD-ROMs and DVDs, magnetooptical media such as floptical disks, and hardware devices specially configured to store and perform program commands, such as read-only memory (ROM), random-access memory (RAM), and flash memory. Examples of the computer command include machine codes generated by a compiler, and high-level language codes executable by a computer by using an interpreter.

Furthermore, an operating method of a display device, according to embodiments of the disclosure, may be provided by being included in a computer program product. The computer program products are products that can be traded between sellers and buyers.

The computer program product may include a software program or a computer-readable storage medium storing a software program. For example, the computer program product may include a product (for example, a downloadable application) in the form of a software program that is electronically distributable through a manufacturer of the electronic device or an electronic market (for example, Google PlayStore^{™} or AppStore^{™}). For electronic distribution, at least a part of the software program may be stored in the storage medium or temporarily generated. In this case, the storage medium may be a storage medium of a server of a manufacturer, a server of an electronic market, or a relay server that temporarily stores the software program.

The computer program product may include a storage medium of a server or a storage medium of a client device in a system including the server and the client device. Alternatively, when there is a third device, e.g., a smartphone, that communicates with the server or the client device, the computer program product may include a storage medium of the third device. Alternatively, the computer program product may include the software program transmitted from the server to the client device or the third device, or transmitted from the third device to the client device.

In this case, one of the server, the client device, and the third device may perform a method according to embodiments of the disclosure by executing the computer program product. Alternatively, two or more of the server, the client device, and the third device may execute the computer program product to perform the method according to the embodiments of the disclosure in a distributed fashion.

For example, the server, for example, a cloud server or an artificial intelligence server, may execute the computer program product stored in the server to control the client device communicatively connected to the server to perform the method according to the embodiments of the disclosure.

The above-described embodiments are merely specific examples to describe technical content according to the embodiments of the disclosure and help the understanding of the embodiments of the disclosure, not intended to limit the scope of the embodiments of the disclosure. Accordingly, the scope of various embodiments of the disclosure should be interpreted as encompassing all modifications or variations derived based on the technical spirit of various embodiments of the disclosure in addition to the embodiments disclosed herein.

## Claims

1. A display device (100) comprising:
a display (140);
a memory (130) storing one or more instructions; and
at least one processor (120) configured to execute the one or more instructions to:
control the display to display a first image based on receiving the first image;
output a first sub-image corresponding to a first information area of the first image;
control the display to display a second image, different from the first image, based on receiving the second image;
determine a plurality of candidate areas of the second image, based on a first aspect ratio of the first image, a second aspect ratio of the second image, and location information of the first information area;
determine priorities of the plurality of candidate areas based on the location information of the first information area and the second aspect ratio;
identify, based on the priorities, a second information area corresponding to the first information area from the plurality of candidate areas; and
output a second sub-image corresponding to the second information area.

2. The display device of claim 1, wherein a first image content corresponding to the first image is different than a second image content corresponding to the second image, or the first aspect ratio of the first image is different than the second aspect ratio of the second image.

3. The display device of claim 1 or 2, wherein the at least one processor (120) is further configured to execute the one or more instructions to:
determine, as one candidate area among the plurality of candidate areas, an area in the second image at a same location as the first information area.

4. The display device of any one of claims 1 to 3, wherein the at least one processor (120) is further configured to execute the one or more instructions to:
determine, as one candidate area among the plurality of candidate areas, an area at a second location in the second image corresponding to a first location of the first information area in the first image.

5. The display device of any one of claims 1 to 4, wherein the at least one processor (120) is further configured to execute the one or more instructions to:
determine, as one candidate area among the plurality of candidate areas, a corner area of the second image having the second aspect ratio, based on the first information area being in a corner area of the first image having the first aspect ratio.

6. The display device of any one of claims 1 to 5, wherein the at least one processor (120) is further configured to execute the one or more instructions to:
control the display to display the plurality of candidate areas;
obtain a user input selecting one of the plurality of candidate areas; and
detect, based on a selected candidate area, the second information area corresponding to the first information area.

7. The display device of any one of claims 1 to 6, wherein the at least one processor (120) is further configured to execute the one or more instructions to:
detect a plurality of information areas from the plurality of candidate areas;
control the display to display the detected plurality of information areas;
obtain a user input selecting one of the plurality of information areas; and
identify a selected information area as the second information area, based on the user input.

8. The display device of any one of claims 1 to 7, wherein the first sub-image comprises an image corresponding to a zooming in of the first information area,
wherein the second sub-image comprises an image corresponding to a zooming in of the second information area, and
wherein the at least one processor (120) is further configured to execute the one or more instructions to control the display to display the first sub-image or the second sub-image.

9. The display device of any one of claims 1 to 8, wherein the at least one processor (120) is further configured to execute the one or more instructions to:
output the first sub-image or the second sub-image to an external device.

10. The display device of any one of claims 1 to 9, wherein the at least one processor (120) is further configured to execute the one or more instructions to:
determine the plurality of candidate areas of the second image, based on at least one of content information of the second image or location information about where the second image is displayed.

11. The display device of any one of claims 1 to 10, wherein the first image and the second image comprise a game image corresponding to game content, and
wherein the first information area and the second information area comprise at least one of a mini-map, a skill window, an item window, a character window, a chat window, or a control window in the game image.

12. An operating method of a display device, the operating method comprising:
displaying a first image based on receiving the first image (S410);
outputting a first sub-image corresponding to a first information area of the first image (S420);
displaying a second image, different from the first image, based on receiving the second image (S430);
determining a plurality of candidate areas of the second image, based on first aspect ratio of the first image, second aspect ratio of the second image, and location information of the first information area (S440);
determining priorities of the plurality of candidate areas based on the location information of the first information area and the second aspect ratio;
identifying, based on the priorities, a second information area corresponding to the first information area from the plurality of candidate areas (S450); and
outputting a second sub-image corresponding to the second information area (S460).

13. The operating method of claim 12, wherein a first image content corresponding to the first image is different than a second image content corresponding to the second image, or the first aspect ratio of the first image is different than the second aspect ratio of the second image.

14. The operating method of claim 12 or 13, wherein the determining the plurality of candidate areas of the second image (S440) comprises determining, as one candidate area among the plurality of candidate areas, an area in the second image at a same location as the first information area.

15. One or more non-transitory computer-readable recording media having stored therein a program for performing the operating method of any one of claims 12 to 14.
